# FASCICULE DE BREVET EUROPEEN

(11) **EP 2 414 431 B1**
(45) Date de publication et mention de la délivrance du brevet: **24.09.2014**
(21) Numéro de dépôt: 10717704.0
(22) Date de dépôt: 31.03.2010
(51) Int. Cl.: C08G 65/22, C08G 65/333, C04B 103/30, C04B 24/24, C04B 24/32, C08G 65/335

(54) **FLUIDIFIANTS POUR SUSPENSIONS AQUEUSES DE PARTICULES MINÉRALES ET PÂTES DE LIANT HYDRAULIQUE**
VERFLÜSSIGER FÜR WASSERSUSPENDIERTE PARTIKELN UND PASTEN AUS HYDRAULISCHEN BINDERN
THINNERS FOR AQUEOUS SUSPENSIONS OF MINERAL PARTICLES AND HYDRAULIC BINDER PASTES

(30) Priorité: 02.04.2009 FR 0952132
(43) Date de publication de la demande: 08.02.2012
(73) Titulaire: Chryso, 92440 Issy-Les-Moulineaux (FR)
(72) Inventeur: MAITRASSE, Philippe, F-45170 Chilleurs Aux Bois (FR); PELLERIN, Bruno, F-77210 Avon (FR); LEISING, Frédéric, F-60300 Avilly Saint Leonard (FR)
(74) Mandataire: Blot, Philippe Robert Emile
(86) Numéro de dépôt international: PCT/FR2010/050614
(87) Numéro de publication internationale: WO 2010/112775

(56) Documents cités:
- EP-A2- 1 136 543
- WO-A-98/51637

## Description

La présente invention concerne de nouveaux fluidifiants pour suspensions aqueuses de particules minérales et pâtes de liant hydraulique.

Il est connu d'introduire des dispersants ou des fluidifiants dans les suspensions aqueuses de particules minérales pour abaisser leur viscosité ou pour diminuer leur teneur en eau, aux valeurs requises pour certaines applications comme l'enduction. Les suspensions ainsi fluidifiées peuvent servir à la préparation de produits industriels divers, dont les peintures, des produits pour l'enduction du papier et des formulations pour des caoutchoucs et pour des résines synthétiques.

Il est également connu d'ajouter aux liants hydrauliques tels que les ciments, les plâtres, les sulfates de calcium ou la chaux, des fluidifiants pour diminuer la teneur en eau de la pâte de liant hydraulique. De ce fait, la pâte de liant hydraulique présente, après durcissement, une structure plus dense, ce qui se traduit notamment par une résistance mécanique plus élevée.

Comme on peut le comprendre assez aisément au travers du cas particulier de l'enduction des papiers, les suspensions de particules minérales, d'une manière générale, doivent disposer d'une viscosité faible pour faciliter leur manipulation et leur application, de même qu'une teneur en matière minérale la plus élevée possible afin de diminuer la quantité d'énergie calorifique nécessaire à l'évacuation par séchage de leur fraction aqueuse. L'obtention de ces qualités dans des conditions économiques acceptables ne peut généralement être cumulée qu'en ayant recours à des fluidifiants.

Pour des raisons économiques, on recherche des fluidifiants permettant d'obtenir des fluidités très élevées et stables avec un dosage faible.

De plus, on recherche des fluidifiants, qui, lorsqu'ils sont mis en oeuvre dans des mélanges complexes, ne perturbent pas les propriétés du mélange. Ainsi, dans le domaine des liants hydrauliques par exemple, il est important que le fluidifiant n'interfère pas avec le processus de prise du liant hydraulique, afin d'assurer l'obtention d'un produit ayant la qualité requise.

Dans le domaine des compositions pour ciment de forage, la demande de brevet européen n° 444 542 propose d'utiliser comme fluidifiants des composés répondant à l'une des formules : 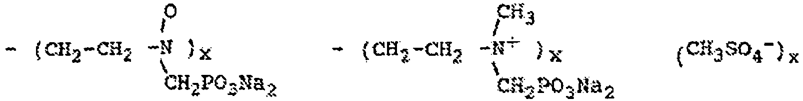 dans lesquelles x est supérieur ou égal à 10, afin de diminuer la viscosité au point de rendre les compositions pompables dans des conditions d'écoulement turbulent. L'inconvénient majeur de ces fluidifiants réside dans les retards de prise extrêmement importants qu'ils génèrent. Ils ont dès lors des applications très limitées et ils ne peuvent pas être mis en oeuvre lorsque le temps de prise recherché du liant hydraulique est relativement bref.

On connaît aussi des agents fluidifiants non polymères comprenant une chaîne polyoxyalkylée et un groupement amino-di(alkylène phosphonique) (brevet français FR 269673 - et demande internationale WO 94/08913). Ces fluidifiants confèrent aux suspensions une viscosité constante dans le temps qui reste faible malgré l'introduction d'un ou plusieurs électrolytes. La chaîne polyoxyalkyle de ces fluidifiants ne présente aucune affinité pour les surfaces calciques.

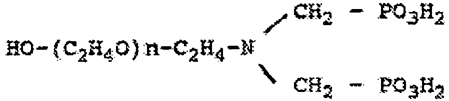

La demande de brevet FR 2892420 décrit des polymères phosphonés et leur utilisation comme adjuvants pour des suspensions de particules minérales et en particulier comme plastifiants des compositions de ciments. Ces polymères, de type peigne, sont composés d'une chaîne principale polycarboxylée et des groupes latéraux polyoxyalkylés et phosphonés liés à la chaîne principale par des liaisons ester, amide, éther ou amine. Ces dispersants procurent un effet fluidifiant aussi bien à des suspensions aqueuses de particules minérales qu'à des pâtes de liant hydraulique.

Un des objectifs de l'invention est de proposer de nouveaux composés utiles notamment à titre d'adjuvants pour des suspensions de particules minérales et en particulier pour des liants hydrauliques. Ces adjuvants permettent un bon maintien de l'ouvrabilité des liants hydrauliques sans induire de retard de prise excessif.

Les inventeurs ont en effet découvert de manière surprenante que des composés avec au moins une terminaison phosphonique à base de polyglycérols linéaires étaient utiles dans les applications susmentionnées.

Selon un premier aspect, l'invention concerne un composé de formule (I) suivante : 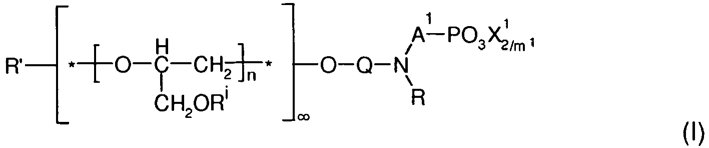 dans laquelle :
- n représente un nombre entier compris entre 1 et 100 ;
- i est un nombre entier variant de 1 à n tel que, pour chaque valeur de i, chacun des Rⁱ représente un atome d'hydrogène, un alkyle, un aryle, un alkylalcoxy, un radical -[CH₂-CH₂-O]_{q}-Alk, où q représente un nombre entier de 1 à 20 et Alk représente un alkyle;
- R représente un hydrogène ou un alkyle,
- Q représente un groupe alkylène linéaire ou ramifié comprenant de 2 à 10 atomes de carbone,
- A¹ représente un groupe alkylène ou alkylidène comprenant de 1 à 6 atomes de carbone, ou un groupe arylène,
- X¹ représente un hydrogène, un alkyle de 1 à 5 atomes de carbone ou un cation mono- ou divalent, notamment un cation alcalin, alcalino-terreux ou ammonium, tels que m¹ représente 1 lorsque X¹ représente un hydrogène, un alkyle de 1 à 5 atomes de carbone ou un cation monovalent, et m¹ représente 2 lorsque X¹ représente un cation divalent,
- R représente un hydrogène, un alkyle de 1 à 6 atomes de carbone, un aryle ou un groupement -A²-PO₃X²_{2/m2}, où :
   - A² représente un groupe alkylène ou alkylidène comprenant de 1 à 6 atomes de carbone, ou un groupe arylène,
   X² représente un hydrogène, un alkyle de 1 à 5 atomes de carbone ou un cation mono- ou divalent, notamment un cation alcalin, alcalino-terreux ou ammonium, tels que m² représente 1 lorsque X² représente un hydrogène, un alkyle de 1 à 5 atomes de carbone ou un cation monovalent, et m² représente 2 lorsque X² représente un cation divalent.

Les composés préférés sont les composés de formule (I) où i est 1, 2, 3, 4, 5 ou 6 de préférence 1, 2 ou 3.

Dans le cadre de cet exposé, et sauf mention contraire, les radicaux alkyle représentent des radicaux hydrocarbonés saturés monovalents, en chaîne droite ou ramifiée ou cyclique (par exemple un radical cyclohexyle), de 1 à 8 atomes de carbone, de préférence de 1 à 6 atomes de carbone.

Comme exemples de radicaux alkyle peuvent notamment être cités :
- lorsqu'ils sont linéaires, les radicaux méthyle, éthyle, propyle, butyle, pentyle, hexyle, octyle, nonyle, décyle, dodécyle, tétradécyle, hexadécyle, et octadécyle,
- lorsqu'ils sont ramifiés, les groupements isopropyle, s-butyle, isobutyle et *t*-butyle.

Dans le cadre de cet exposé, et sauf mention contraire, les radicaux alkylène représentent des radicaux hydrocarbonés saturés divalents, en chaîne droite ou ramifiée, de 1 à 10 atomes de carbone, de préférence de 1 à 6 atomes de carbone. Les radicaux méthylène, éthylène et propylène sont particulièrement préférés.

Les radicaux alkylidène représentent des radicaux hydrocarbonés divalents, en chaîne droite ou linéaire ou cyclique, qui comprennent une ou plusieurs insaturations éthyléniques. Parmi les radicaux alkylidène, on peut notamment citer les radicaux allylène ou vinylène.

Dans le cadre de cet exposé, et sauf mention contraire, les radicaux aryle représentent des systèmes aromatiques hydrocarbonés, mono ou bicycliques de 6 à 10 atomes de carbone. Les groupes aryles sont éventuellement substitués par un ou plusieurs groupes alkyles ou alkoxy, notamment par méthyle ou méthoxy. Parmi les radicaux aryles, on peut notamment citer le radical phényle ou naphtyle.

Les radicaux arylène représentent des radicaux divalents dérivés de radicaux aryle par élimination d'un atome d'hydrogène. Le phénylène ou naphtylène sont les arylène préférés.

Un cation est un ion porteur d'une charge positive. Les cations alcalins sont les cations constitués de métaux alcalins et sont de préférence Li⁺, Na⁺, K⁺ et Cs⁺. Les cations alcalino-terreux sont les cations constitués de métaux alcalino-terreux et sont de préférence Ca²⁺ et Mg²⁺. Un cation ammonium est un cation comportant un atome azote porteur d'une charge positive. Le cation ammonium correspond :
- soit à la forme protonée d'une fonction amine, qui peut être primaire (l'amine correspondante est alors l'ammoniac ou, par exemple, le méthylammonium), secondaire (le cation ammonium est alors par exemple le diméthylammonium, le diéthylammonium ou le pipéridinium), tertiaire (le cation ammonium est alors par exemple le triméthylammonium ou le triéthylammonium) ou aromatique (le cation ammonium est alors par exemple le pyridinium ou un ion imidazolium),
- soit à un cation ammonium quaternaire, par exemple un tétraalkyl d'ammonium.

Par « co », on entend que l'arrangement des unités consécutives du polymère n'est pas spécifié (l'arrangement peut par exemple être à blocs, alterné ou statistique).

Par « * », on entend que les différentes unités peuvent être assemblées les unes aux autres en tout ordre, chaque unité étant généralement assemblée de tête à queue.

Les radicaux alkylalcoxy préférés sont les 1-(1-alkylalcoxy), de préférence le 1-(éthoxy-1-éthyl).

De préférence, dans toutes les formules des composés selon l'invention, chacun des Rⁱ des composés selon l'invention représente indépendamment un hydrogène, un méthyle, un éthyle, un aryle, -CH(CH₃)-OCH₂CH₃, -[CH₂-CH₂-O]_{q}-CH₃, où q représente un nombre entier de 1 à 20, de préférence de 1 à 5.

Dans un mode de réalisation préféré, dans la formule (I) précitée, R représente un groupement -A²-PO₃X²_{2/m2}, et le composé a la formule (II) suivante : 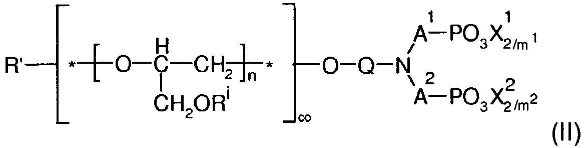 dans laquelle :
- n, i, Rⁱ, R^{'}, Q, X¹, X², m¹ et m² sont tels que définis ci-dessus, et
   A¹ et A² représentent indépendamment un groupe alkylène ou alkylidène comprenant de 1 à 6 atomes de carbone, ou un groupe arylène.

L'atome d'azote des composés de formule (II) est donc porteur de deux fonctions phosphonique, identiques ou différentes.

De préférence, pour les composés de formule (II) et tous les composés selon l'invention comportant des groupements A₁ et A₂, A₁ = A₂. Les composés symétriques sont en effet plus faciles à synthétiser. De plus, les composés ayant un groupe terminal un groupe terminal di-phosphonique sont plus efficaces que leurs homologues mono-phosphonique pour la fluidification de surface calcique, notamment pour suspensions de carbonate de calcium. En effet, la fonction phosphonique a une forte affinité pour la surface calcique. Cette affinité s'explique par le fait que, dans les dispersions en phase aqueuse de sels de calcium (par exemple le carbonate de calcium), les sels de calcium non solubilisés sont en équilibre avec leurs ions solubles. Au voisinage de la surface des sels de calcium non solubilisés se trouvent des ions calcium, pour lesquels la fonction phosphonique terminale des composés de formule (I) a une très forte affinité. Les composés de formule (II) porteurs de deux fonctions phosphoniques ont donc une affinité pour les surfaces calciques encore plus forte.

Dans un mode de réalisation, dans la formule (I) précitée, i représente 2, et le composé a la formule (III) suivante : 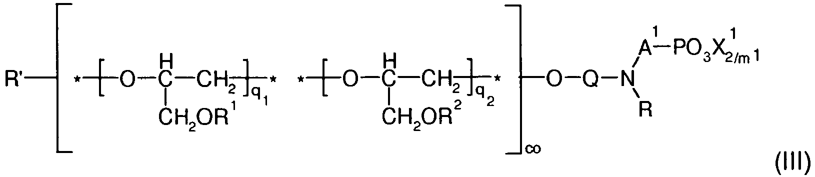 dans laquelle :
- R^{'}, A¹, R, Q, X¹ et m¹ sont tels que définis ci-dessus,
- R¹ et R² répondent à la définition des Rⁱ,
- q₁ et q₂ représentent indépendamment un nombre entier de 0 à 100, étant entendu que la somme de q₁ et q₂ vaut n, n étant tel que défini ci-dessus.

Lorsque q₁ ou q₂ vaut 0, le composé comprend un seul dérivé du glycérol (un seul motif dans l'oligomère). Lorsque q₁ et q₂ sont tous les deux différents de 0, le composé comprend deux dérivés du glycérol (deux motifs dans l'oligomère).

Dans un mode de réalisation, dans la formule (III) précitée, R représente un groupement -A²-PO₃X²_{2/m2}, et le composé a la formule (IV) suivante : 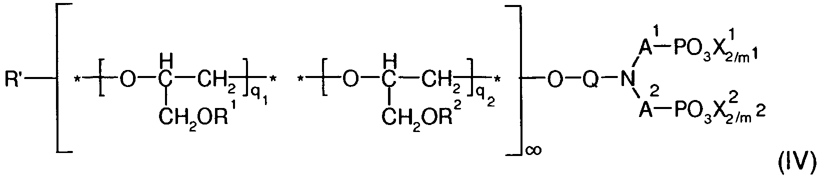 dans laquelle :
- R^{'}, A¹, A², Q, X¹, X², m¹ et m² sont tels que définis ci-dessus,
- R¹ et R² répondent à la définition des Rⁱ,
- q₁ et q₂ représentent indépendamment un nombre entier de 0 à 100, étant entendu que la somme de q₁ et q₂ vaut n, n étant tel que défini ci-dessus.

Dans un mode de réalisation, dans la formule (I) précitée, i représente 1, et le composé a la formule (V) suivante : 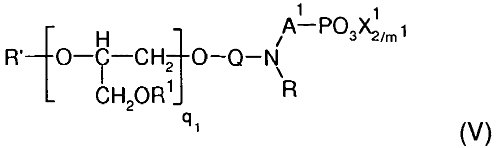 dans laquelle n₁, R¹, R³, Q, A¹, R, X¹ et m¹ sont tels que définis ci-dessus.

Dans un mode de réalisation, dans la formule (V) précitée, R représente un groupement -A²-PO₃X²_{2/m2}, et le composé a formule (VI) suivante : 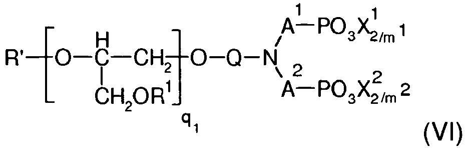 dans laquelle n₁, R¹, R³, Q, A¹, A², X¹, X², m¹ et m² sont tels que définis ci-dessus.

Dans un mode de réalisation, dans la formule (III) précitée, A¹ représente un groupement méthylène -CH₂- et le composé a la formule (VII) suivante : 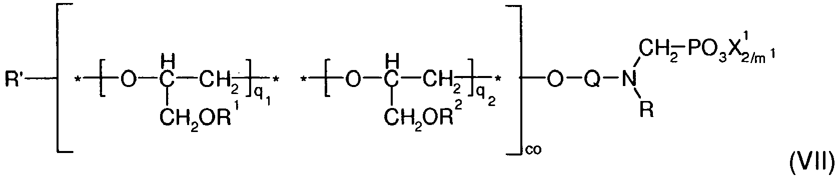 dans laquelle :
- R^{'}, Q, X¹, R et m¹ sont tels que définis ci-dessus,
- R¹ et R² répondent à la définition des Rⁱ,
- q₁ et q₂ représentent indépendamment un nombre entier de 0 à 100, étant entendu que la somme de q₁ et q₂ vaut n, n étant tel que défini ci-dessus.

Dans un mode de réalisation, dans la formule (VII) précitée, R représente un groupement -CH2-PO³X²_{2/m2}, et le composé a la formule (VIII) suivante : 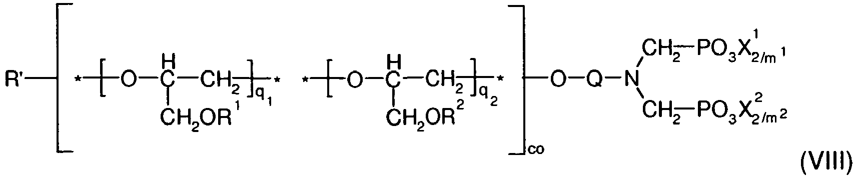 dans laquelle :
- R^{'}, Q, X¹, X², m¹ et m² sont tels que définis ci-dessus,
- R¹ et R² répondent à la définition des Rⁱ,
- q₁ et q₂ représentent indépendamment un nombre entier de 0 à 100, étant entendu que la somme de q₁ et q₂ vaut n, n étant tel que défini ci-dessus.

Dans un mode de réalisation, dans la formule (VII) précitée, Q représente un groupement éthylène -CH₂-CH₂-, et le composé a la formule (IX) suivante : 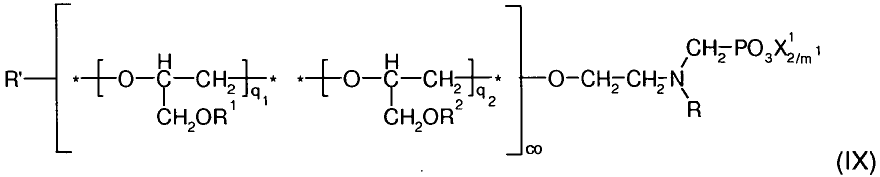 dans laquelle :
- R^{'}, X¹, R et m¹ sont tels que définis ci-dessus,
- R¹ et R² répondent à la définition des Rⁱ,
- q₁ et q₂ représentent indépendamment un nombre entier de 0 à 100, étant entendu que la somme de q₁ et q₂ vaut n, n étant tel que défini ci-dessus.

Dans un mode de réalisation, dans la formule (IX) précitée, R représente un groupement-CH₂-PO₃X²_{2/m2}, et le composé a la formule (X) suivante : 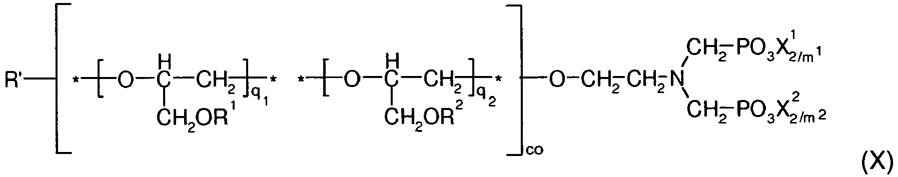 dans laquelle :
- R^{'}, X¹, X², m¹ et m² sont tels que définis ci-dessus,
- R¹ et R² répondent à la définition des Rⁱ,
- q₁ et q₂ représentent indépendamment un nombre entier de 0 à 100, étant entendu que la somme de q₁ et q₂ vaut n, n étant tel que défini ci-dessus.

L'invention concerne également les composés de formules (XI), (XII), (XIII) et (XIV) suivantes : 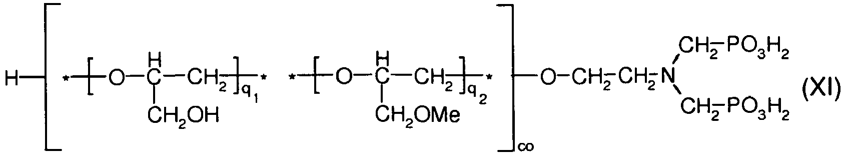 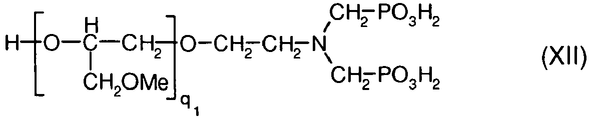 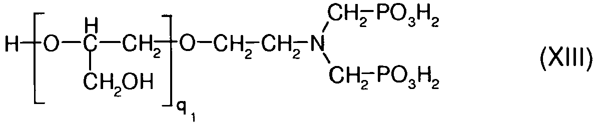 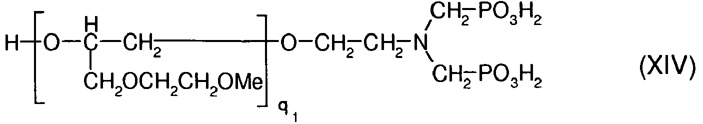 dans lesquelles q₁ et q₂ représentent indépendamment un nombre entier de 0 à 100, étant entendu que la somme de q₁ et q₂ vaut n, n étant tel que défini ci-dessus.

Selon un deuxième aspect, l'invention concerne un procédé de préparation d'un composé de formule (I) telle que décrite ci-dessus,comprenant les étapes de :
- (co)polymérisation en milieu basique d'au moins un éther du glycidol en présence d'un amorceur anionique porteur d'une fonction amine primaire pour obtenir un polyglycérol à terminaison amine primaire,
- transformation de la fonction amine primaire du polyglycérol obtenu lors de l'étape précédente en un groupe amino-alkylène phosphonique.

Par « (co)polymérisation », on entend désigner aussi bien une réaction de polymérisation qu'une réaction de copolymérisation. Ainsi, lorsqu'un seul éther du glycidol est mis en oeuvre, une polymérisation (ou homopolymérisation) a lieu et un polymère comprenant le même motif dérivé du glycérol est obtenu. Lorsqu'au moins deux éthers du glycidol sont utilisés, une copolymérisation a lieu et un copolymère comprenant plusieurs types de motifs est obtenu (autant de motifs différents que d'éthers de glycérols différents utilisés). La distribution des unités dérivées de différents monomères dans le copolymère obtenu peut être statistique (par exemple par réaction d'un mélange d'éthers de glycidols) ou en bloc (par exemple par ajout séquentiel d'éthers de glycidols).

Par « milieu basique », on entend un milieu dont le pH est supérieur à 7, généralement supérieur à 10.

L'utilisation d'éther(s) du glycidol a pour avantage d'aboutir à des polymères ayant une structure régulière car la fonction hydroxyle du glycidol est protégée lors de la polymérisation. En effet la polymérisation anionique du glycidol conduit à des produits ayant une structure très branchée plutôt qu'à un polyglycidol linéaire et régulier suite à l'implication du groupe hydroxyle dans des réactions secondaires d'échange entre les fonctions alcool et groupes alcoolate.

Certains éthers du glycidol sont disponibles commercialement, comme le 1-méthoxy-2,3-époxypropane (glycidyl méthyl éther) commercialisé par la Société TCI Europe^{®}. Les éthers du glycidol peuvent également être préparés en suivant les procédures décrites ci-après.

Ainsi, dans un mode de réalisation, le procédé précité de préparation du composé de formule (I) comporte en outre une étape préalable de préparation dudit éther de glycidol à partir d'un composé de formule (XX) suivante : 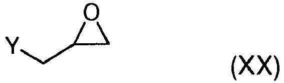 dans laquelle Y représente -OH, un alkylsulfonate ou un halogène, de préférence un chlore.

Par halogène, on entend un chlore, un fluor, un brome ou un iode.

Le choix du groupe Y dans la formule (XX) permet d'obtenir des éthers de glycidol de nature différentes.

Ainsi, pour synthétiser un éther de glycidol de formule : 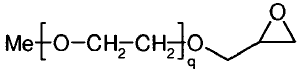 on peut notamment utiliser comme produit de départ un composé de formule (XX) où Y représente un halogène. Le composé (XX) dans lequel Y représente un chlore correspond à l'épichlorhydrine. L'étape de préparation de l'éther de glycidol consiste alors en la réaction entre le composé de formule (XX) où Y représente un halogène et un anion de formule (XXI) suivante :

M⁺,⁻O-[CH₂-CH₂-O]_{q}-CH₃ (XXI)

dans laquelle q représente un nombre entier de 1 à 20 de préférence de 1 à 5 et M représente un métal alcalin. Cette réaction est illustrée sur le schéma suivant :

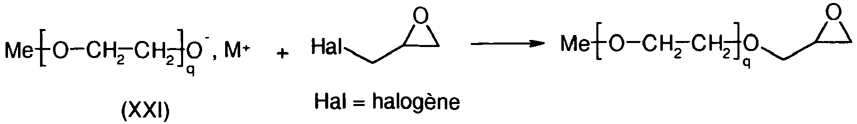

De préférence, la réaction précitée est réalisée avec de l'épichlorhydrine et
- soit du monométhyl éthylène glycol,
- soit du monométhyl bis(éthylène glycol),
- soit du monométhyl tri(éthylène glycol)
en présence d'une base (génération in situ d'un anion de formule (XXI) précitée avec respectivement q = 1, 2 ou 3).

Par ailleurs, pour synthétiser l'1-éthoxy-1-éthylglycidyl éther, on peut notamment utiliser comme produit de départ un composé de formule (XX) où Y représente -OH. L'étape de préparation de l'éther du glycidol consiste alors en la réaction entre le composé de formule (XX) où Y représente -OH et l'éthylvinyléther. Le composé de formule (XX) où Y représente -OH est le glycidol, qui présente l'avantage d'être disponible dans le commerce en grandes quantités.

La réaction du glycidol pour obtenir le 1-éthoxy-1 éthylglycidyl éther décrite par FITTON [Synthesis 1140 (1987)] est réalisée avec un excès d'éthylvinyléther en présence d'une quantité catalytique d'acide para -toluène sulfonique à une température inférieure à 40°C.

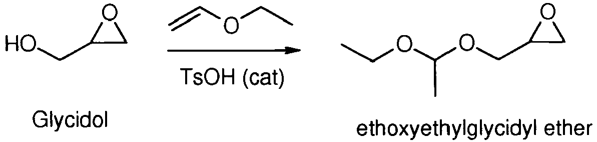

La mise en oeuvre du procédé selon l'invention à partir du 1-éthoxy-1 éthylglycidyl éther est avantageuse car la liaison acétal latérale obtenue dans le composé de formule (I) selon l'invention (c'est-à-dire Rⁱ = -CH(CH₃)-O-Et) peut être clivée en milieu acide pour donner des fonctions alcools latérales (Rⁱ = -H), par exemple en suivant le protocole décrit dans « Chimie Organique Avancée » de F.A. CAREY-R.J. SUNDBERG - M.MOTTET page 442 (1998) (Editeur De BOECK).

Dans un mode de réalisation, le procédé précité de préparation du composé de formule (I) comporte en outre une étape préalable de préparation du composé de formule (XX) où Y représente -OH à partir de carbonate de glycérol ou d'éther méthylique du carbonate de glycérol, tel que décrit dans Green Chem., 2008, 10, p. 16).

Le procédé selon l'invention permet avantageusement d'utiliser des dérivés du glycérol (éther de glycidol, carbonate de glycérol, éther méthylique du carbonate de glycérol, glycidol, épichlorhydrine). Le glycérol est l'un des principaux sous-produits de l'oléochimie et provient essentiellement de la transformation d'huiles de graisses et autres acides gras.

Par « amorceur » (également appelé « initiateur »), on désigne une espèce chimique capable d'initier la réaction de polymérisation. Dans le cadre de l'invention, l'amorceur est une espèce chimique capable de réagir avec la fonction époxyde de l'éther du glycidol, provoquant ainsi l'ouverture du cycle époxyde et création d'une fonction alcoolate qui pourra alors réagir sur la fonction époxyde d'un deuxième éther du glycidol (propagation).

Dans un mode de réalisation préféré du procédé de préparation d'un composé de formule (I) précité, l'amorceur anionique porteur d'une fonction amine primaire est un aminoalcoolate, de préférence un aminoalcoolate alcalin. Généralement, l'aminoalcoolate a la formule -O-Q-NH₂, où Q est tel que défini ci-dessus. Les aminoalcoolates préférés sont les alcoolates de la méthanolamine, de l'éthanolamine ou de la propan-3-olamine.

Les aminoalcoolates peuvent être obtenus à partir d'un aminoalcool mis en contact avec une base, généralement choisie telle qu'elle puisse transformer quantitativement les fonctions alcools en fonctions alcoolates à température ambiante dans un solvant adapté. Les bases utilisées peuvent être les hydroxydes alcalins, les alcoolates alcalins ou les hydrures alcalins (notamment l'hydrure de potassium ou de sodium). La mise en contact de l'aminoalcool avec la base est généralement réalisée à des températures comprises entre -80 et 100°C, notamment -15°C à 25°C.

Lors de la réaction de (co)polymérisation, le solvant est choisi de préférence parmi les solvants capables de chélater les cations alcalins des fonctions alcoolates. Les solvants convenant particulièrement bien sont le tétrahydrofuranne, le diglyme (diéthylène glycol diméthyl éther), le diméthylsulfoxyde ou l'hexaméthylphosphoramide. La réaction peut également être effectuée sans solvant.

La réaction de (co)polymérisation d'au moins un éther du glycidol est de préférence effectuée sous atmosphère anhydre afin d'éviter l'introduction d'eau dans le milieu réactionnel, ce qui régénérerait les fonctions alcools (ouverture des époxydes des éthers de glycidol) et perturberait donc la réaction de polyaddition. On peut pour cela travailler sous azote, sous argon ou sous tout autre gaz inerte vis-à-vis du milieu réactionnel. Dans le cas d'une synthèse sans solvant, la réaction peut être également réalisée sous vide.

Dans un mode de réalisation préféré du procédé de préparation d'un composé de formule (I) précité, la (co)polymérisation est effectuée à une température comprise entre -80 et 300 °C, notamment entre 0 et 200 °C, de préférence entre 15 et 100 °C.

La durée de la réaction de (co)polymérisation est fonction du mode opératoire suivi et peut être déterminée par suivi par résonance magnétique nucléaire.

Généralement, afin de terminer la réaction de (co)polymérisation, on neutralise ou on fonctionnalise le produit obtenu en fixant sur chaque atome d'oxygène terminal (étape de terminaison de la (co)polymérisation):
- une chaîne polyglycérylée (ajout de motifs à l'oligomère),
- un atome d'hydrogène (soit R' = H dans la formule (I)) ou
- un radical alkyle (soit R' représente un groupe alkyle dans la formule (I)).

On peut ainsi ajouter un polyglycérol, acidifier le milieu réactionnel pour fixer un proton, ou ajouter un agent d'alkylation, par exemple le diméthylsulfate ou l'iodure de méthyle pour réaliser une méthylation (R' = Me dans la formule (I)). L'agent employé pour effectuer l'alkylation et les conditions expérimentales doivent toutefois être choisis en tenant compte de la présence de la fonction amine terminale afin de ne pas réaliser de N-alkylation.

A la fin de cette étape de (co)polymérisation, on accède à un polyglycérol à terminaison amine primaire de formule (XXII) suivante : 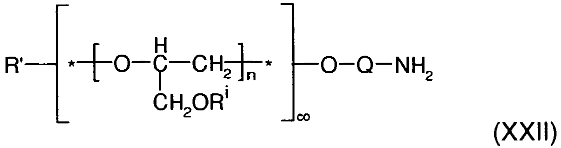 où n, i, Rⁱ, R^{'}, Q, sont tels que définis ci-dessus. Le polyglycérol obtenu est porteur de fonctions éther ou acétal latérales.

La transformation de la fonction amine primaire du polyglycérol de formule (XII) en un groupe amino-alkylène phosphonique pour préparer le composé de formule (I) diffère selon la nature du groupe X dans le composé de formule (I).

Dans le mode de réalisation du procédé de préparation du composé de formule (I) dans laquelle X est un hydrogène ou un cation, la transformation de la fonction amine primaire du polyglycérol en un groupe amino-alkylène phosphonique est réalisé par réaction de Moedritzer-Irani, éventuellement suivie d'une étape de basification. Les protocoles décrits dans Kurt MOEDRITZER, Riyad R. IRANI J. Org. Chem. 1966 31 (5) p 1603-1607 peuvent notamment être suivis.

Dans le mode de réalisation du procédé de préparation du composé de formule (I) dans laquelle X est un alkyle de 1 à 5 atomes de carbone, la transformation de la fonction amine primaire du polyglycérol en un groupe amino-alkylène phosphonique est réalisé par réaction de Kabashnick-Fields, éventuellement suivie d'une étape de neutralisation. Les protocoles décrits dans R.A. CHERKASOV V.I. GALKIN Russ. Chem. Rev. 1998 67 857-882 peuvent notamment être suivis.

La transformation de la fonction amine primaire du polyglycérol de formule (XII) en un groupe amino-alkylène phosphonique pour préparer le composé de formule (I) diffère également selon la nature du groupe R dans le composé de formule (I).

Pour obtenir un composé de formule (I) dans lequel R représente H ou A²PO₃X²_{2/m2}, selon les conditions expérimentales des réactions de Moedritzer-Irani et de Kabashnick-Fields, un seul groupe alkylène phosphonique (R = H) ou deux groupes alkylène phosphonique (R = A²PO₃X²_{2/m2}) peuvent être greffés à la fonction amine primaire du polyglycérol de formule (XII). Plus précisément, en augmentant le nombre d'équivalents de réactifs lors des réactions de Moedritzer-Irani et de Kabashnick-Fields et/ou la température, on favorise le greffage de deux groupes alkylène phosphonique..

Partant du composé de formule (I) où R représente H, une N-alkylation ou N-arylation permet alors d'obtenir le composé de formule (I) où R représente un alkyle ou un aryle..

Selon un troisième aspect, l'invention concerne les adjuvants comportant un composé de formule (I) selon l'invention.

Afin de faciliter le dosage, les adjuvants sont généralement formulés en solution.

Ainsi, l'invention concerne un adjuvant comprenant 1 à 50% en poids, notamment de 5 à 40% en poids, de préférence de 10 à 30% en poids, d'au moins un composé de formule (I) et un solvant aqueux, alcoolique ou hydroalcoolique.

De préférence, l'adjuvant comprend un solvant aqueux, généralement de l'eau. Toutefois, l'utilisation d'un autre solvant, tel qu'un alcool (notamment le méthanol ou l'éthanol) ou un glycol, peut être envisagée pour améliorer la solubilisation.

En variante, l'adjuvant comprenant un composé de formule (I) peut également être présenté sous forme sèche ou en poudre.

Les adjuvants, peuvent par ailleurs comprendre d'autres additifs habituels pour les suspensions de particules minérales, par exemple des agents anti-mousses, des accélérateurs, des retardateurs, des agents hydrofuges, des agents désaérants, d'autres dispersants, des entraîneurs d'air ou des stabilisants d'agents anti-mousse.

L'adjuvant décrit est utile pour la fluidification de suspensions de particules minérales.

Les suspensions de particules minérales sont notamment des suspensions de sels de calcium ou le sulfate de calcium, ou des suspensions d'oxydes minéraux, comme le dioxyde de titane ou l'oxyde de fer. Une fois que l'adjuvant contenant le composé selon l'invention est introduit dans ces suspensions, elles peuvent servir à la préparation de produits industriels divers, dont les peintures, des produits pour l'enduction du papier et des formulations pour des caoutchoucs et pour des résines synthétiques.

L'adjuvant est particulièrement utile pour optimiser le maintien de l'ouvrabilité de liants hydrauliques. L'ouvrabilité d'un matériau est mesurée en observant la hauteur d'affaissement d'un volume tronc-conique donné de béton ou le diamètre d'étalement d'un volume tronc-conique donné de mortier ou de béton autoplaçant frais.

Un liant hydraulique est un liant qui se forme et durcit par réaction chimique avec de l'eau. A titre de liants hydrauliques peuvent être citées les compositions plâtres, sulfates de calcium, de chaux et de ciment, en particulier les bétons, notamment les bétons préfabriqués et les bétons prêts à l'emploi. Ces bétons peuvent être destinés notamment au bâtiment et au génie civil.

L'adjuvant permet de diminuer la teneur en eau de la pâte de liant hydraulique. De ce fait, la pâte de liant hydraulique présente, après durcissement, une structure plus dense, ce qui implique une résistance mécanique plus élevée.

Ainsi, selon un quatrième aspect, l'invention concerne l'utilisation d'un composé de formule (I) comme fluidifiant pour des liants hydrauliques et des suspensions de particules minérales. L'invention concerne également l'utilisation d'un composé de formule (I) pour le maintien de l'ouvrabilité des liants hydrauliques.

Le dosage de composé de formule (I), et donc d'adjuvant à ajouter à la suspension de particules minérales ou au liant hydraulique dépend des propriétés recherchées et de l'application envisagée.

Généralement, pour une composition de ciment, un dosage en adjuvant de 0,01 à 2% (qui correspond à un dosage en composé selon l'invention de 0,01% à 1,99% par rapport à la composition de ciment) est utilisé, le pourcentage étant exprimé en masse d'additif sec par rapport à la masse de liant contenu dans la pâte cimentaire. A titre indicatif, un dosage efficace en adjuvant pour la préparation d'une composition de béton prêt à l'emploi est de 0,7 à 1,5% d'une formulation à 20% en poids d'extrait sec par rapport au poids de ciment.

Sans vouloir être lié à une théorie particulière, l'effet fluidifiant des composés selon l'invention pourrait s'expliquer par l'existence de forces de répulsion mises en jeu entre les composés selon l'invention adsorbés à la surface des particules minérales. Plus précisément, les composés selon l'invention s'adsorbent à la surface des grains de ciment (liaison entre les groupes phosphoniques et les ions calcium). Les chaînes polyglycérylées se déploient autour des grains dans la phase aqueuse, ce qui créée un encombrement stérique autour du grain de ciment et empêche l'approche d'autres grains de ciment voisins, et donc leur floculation.

### FIGURES

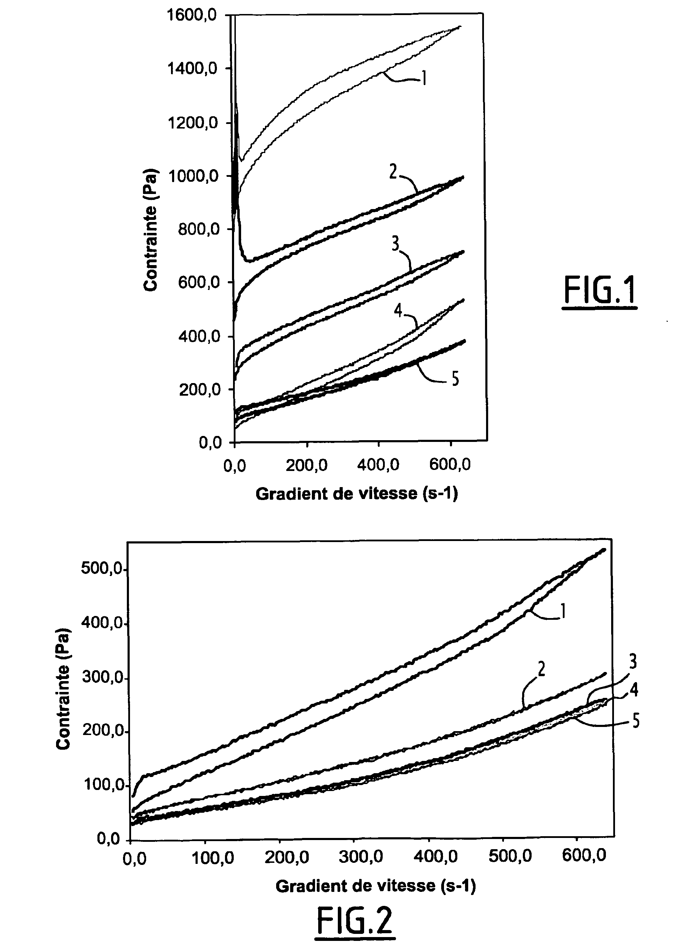

La figure 1 représente la comparaison des contraintes seuil de ciments comprenant différents adjuvants à 5 minutes en fonction du gradient de vitesse (exemple 4). Courbe 1 : sans adjuvant - Courbe 2 : poly (EEGE/GME : 1/1) - Courbe 3 : poly(GMEE)-Courbe 4 : poly(GME) - Courbe 5 :optima 100.
La figure 2 représente la comparaison des contraintes à différentes durées du ciment contenant 1,4% en poids d'un adjuvant contenant de l'oligo(glycidyl méthyl éther) en fonction du gradient de vitesse (exemple 4). Courbe 1 : durée = 5 min - Courbe 2 : durée =30 min - Courbe 3 : durée =90 min - Courbe 4 : durée =60 min - Courbe 5 : durée =120 min.

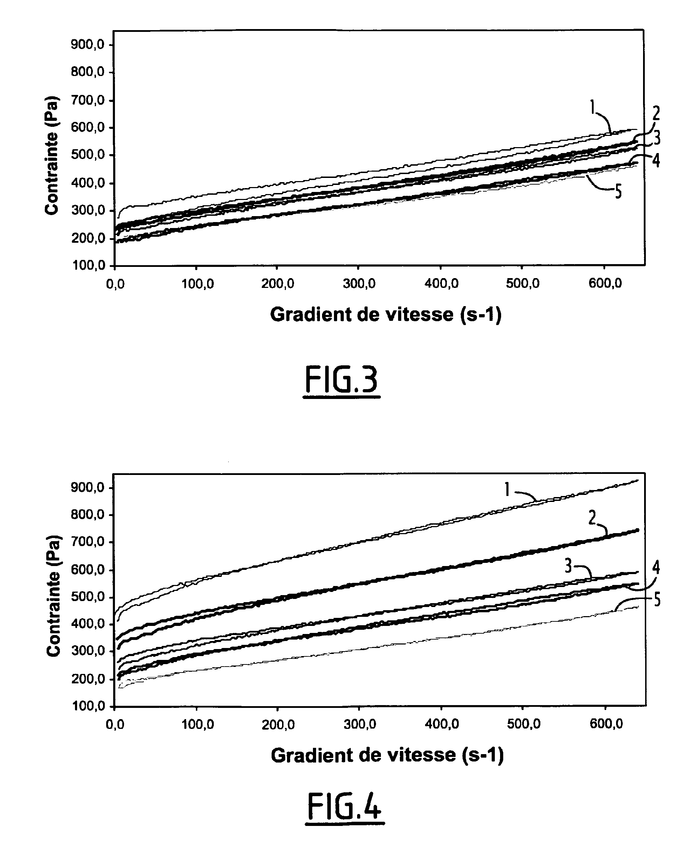

La figure 3 représente la comparaison des contraintes à différentes durées du ciment contenant 0,7% en poids d'un adjuvant Optima 100 en fonction du gradient de vitesse (exemple 4). Courbe 1 : durée = 5 min - Courbe 2 : durée = 120 min - Courbe 3 : durée = 90 min - Courbe 4 : durée = 30 min - Courbe 5 : durée = 60 min.
La figure 4 représente la comparaison des contraintes à différentes durées du ciment contenant 0,7% en poids d'un adjuvant contenant de l'oligo(glycidyl méthyl éther) en fonction du gradient de vitesse (exemple 4). Courbe 1 : durée = 120 min - Courbe 2 : durée = 90 min - Courbe 3 : durée = 60 min - Courbe 4 : durée = 30 min - Courbe 5 : durée = 5 min.

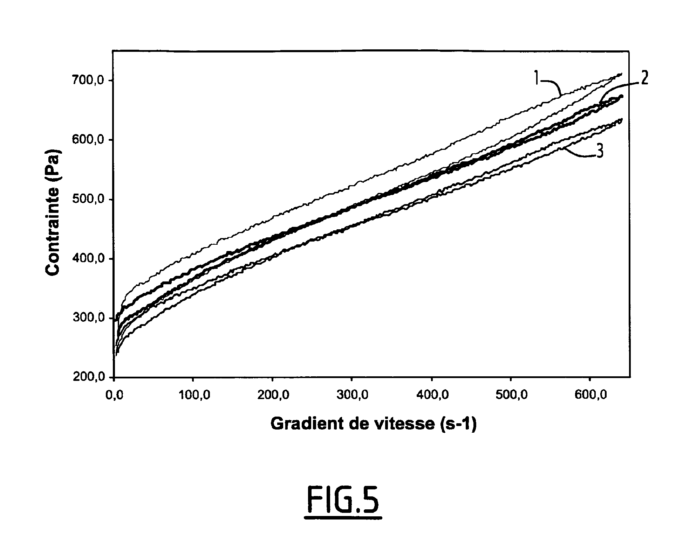

La figure 5 représente la comparaison des contraintes à différentes durées du ciment contenant 1,4% en poids d'un adjuvant contenant de l'oligo(glycidyl méthoxyéthyl éther) en fonction du gradient de vitesse (exemple 4). Courbe 1 : durée = 5 min - Courbe 2 : durée = 60 min - Courbe 3 : durée = 30 min.

### EXEMPLES

### Exemple 1 : Préparation d'éthers de glycidol

### Exemple 1a) : Préparation du 1-éthoxy-1 éthylglycidyl éther (EEGE)

Le 1-éthoxy-1 éthylglycidyl éther est obtenu par protection du glycidol par l'éthyl vinyl éther **(EVE):** dans un tricol de 500 ml muni d'un agitateur mécanique et d'une ampoule à brome, on introduit 30 ml de glycidol (0,45 mole) puis 167 ml d'éther éthyl vinylique (1,6 mole).On ajoute progressivement 0,9 g d'acide para- toluène sulfonique sous agitation et en maintenant la température inférieure à 40°C. La solution est ensuite lavée avec une solution saturée en NaHCO3 et la phase organique est séchée sur Na₂SO₄ puis concentrée.

Le monomère récupéré **(EEGE)** est purifié par distillation sous pression réduite (Teb=86°C, 28 mm). Dans le cas de cette protection par l'éthyl - vinyl - éther, on accède à une liaison acétal latérale qui pourra régénérer, en milieu acide, la fonction hydroxyle.

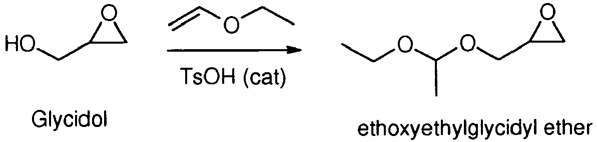

### Exemple 1 b) : Préparation du glycidol méthyl éther (GME)

Le glycidyl méthyl éther **(GME)** commercial (TCI^{®}, pureté 85%) est purifié par distillation (T_{éb}. = 110-114°C), puis stocké 48 h à +5°C sur CaH₂ et filtré avant emploi.

### Exemple 1 c) : Préparation du glycidyl méthoxy éthylène éther (GMEE)

Dans un tricol de 250 ml équipé d'une ampoule de coulée isobare surmontée d'une arrivée d'azote, d'un réfrigérant muni d'un bulleur, et d'un thermomètre, on pèse 4,2 g (105 mmol) d'hydrure de sodium (60% dans l'huile), puis l'on ajoute 150 ml de THF anhydre.

La suspension ainsi obtenue est refroidie à 0°C, le monométhyl éthylène glycol (7,87 g ; 103 mmol ; 1 éq.) est additionné au goutte-à-goutte, puis le milieu réactionnel maintenu 2 h à température ambiante. Une suspension blanche épaisse d'alcoolate est obtenue.

L'épichlorhydrine (ACROS 99%) (40 ml ; 500 mmol ; 5 éq.) est alors ajoutée au goutte -à- goutte au mélange réactionnel, maintenu 12 h supplémentaires à température ambiante, puis chauffé 5 h au reflux du THF (66 °C).

Après retour à température ambiante, le milieu réactionnel est neutralisé à l'aide d'acide sulfurique méthanolique (30% en masse), la suspension résultante séchée sur MgSO₄ puis filtrée, et le filtrat concentré sous pression réduite.

L'huile jaune ainsi produite est distillée à 70-75°C sous 8-10 mbar pour fournir 8,78 g (66 mmol ; rendement = 65%) du produit titre **(GMEE)** sous forme d'une huile incolore (pureté RMN > 95%), conservée sous azote à +5°C.

### Exemple 1d) : Préparation du glycidyl méthoxy di(éthylènoxy) éther (GMDE)

Dans un tricol de 1l équipé d'une ampoule de coulée isobare surmontée d'une arrivée d'azote, d'un réfrigérant muni d'un bulleur, et d'un thermomètre, on pèse 12,1 g (300 mmol) d'hydrure de sodium (60% dans l'huile), puis l'on ajoute 450 ml de THF anhydre.

La suspension ainsi obtenue est refroidie à 0°C, le monométhyl bis(éthylène glycol) (36 g ; 300 mmol ; 1 éq.) est additionné au goutte-à-goutte, puis le milieu réactionnel maintenu 2 h à température ambiante. Une suspension blanche épaisse d'alcoolate est obtenue.

L'épichlorhydrine (ACROS 99%) (125 ml ; 1,6 mol; 5 éq.) est alors ajoutée au goutte -à- goutte au mélange réactionnel, maintenu 12 h supplémentaires à température ambiante, puis chauffé 5 h au reflux du THF (66 °C).

Après retour à température ambiante, le milieu réactionnel est filtré et le filtrat concentré sous pression réduite.

L'huile jaune ainsi produite est distillée à 80-90 °C sous 1 mbar pour fournir 33 g (rendement = 62%) du produit titre **(GMDE)** (pureté RMN > 95%), conservée sous azote à +5°C.

### Exemple 1e) : Préparation du glycidyl méthoxy tri(éthytènoxy) éther (GMTE)

Dans un tricol de 21 équipé d'une ampoule de coulée isobare surmontée d'une arrivée d'azote, d'un réfrigérant muni d'un bulleur, et d'un thermomètre, on pèse 24 g (600 mmol) d'hydrure de sodium (60% dans l'huile), puis l'on ajoute 1 L de THF anhydre.

La suspension ainsi obtenue est refroidie à 0°C, le monométhyl tri(éthylène glycol) (36 g ; 300 mmol ; 1 éq.) est additionné au goutte-à-goutte, puis le milieu réactionnel maintenu 10 h à température ambiante. Une suspension blanche épaisse d'alcoolate est obtenue.

L'épichlorhydrine (ACROS 99%) (240 ml ; 3 mol ; 5 éq.) est alors ajoutée au goutte -à- goutte au mélange réactionnel, maintenu 12 h supplémentaires à température ambiante, puis chauffé 7,5 h au reflux du THF (66 °C).

Après retour à température ambiante, le milieu réactionnel est filtré et le filtrat concentré sous pression réduite.

L'huile jaune ainsi produite est distillée à 105-115°C sous 1 mbar pour fournir 33 g (rendement = 62%) du produit titre **(GMTE),** conservée sous azote à +5°C.

### EXEMPLE 2 : Réaction de (co)polymérisation.

Les réactions d'homopolymérisation et de copolymérisation des monomères précédents **(GMEE, EEGE et GME),** en milieu basique, à l'aide d'amorceurs anioniques fonctionnalisés ont été réalisées.

L'amorçage de la réaction est effectué à l'aide d'alcoolates de l'éthanolamine en solution dans le THF (tétrahydrofurane). L'éthanolamine commerciale (ACROS^{®}, 98%) est purifiée par distillation sur CaH₂ (T_{éb}. = 72-73 °C sous 12 mm Hg).

La (co)polymérisation permet d'accéder à des oligomères polyglycérols à terminaison amine primaire ; dans ces conditions opératoires, la fonction acétal latérale du **polyEEGE** (polyglycidol bloqué par l'éthyl-vinyl-éther) n'est pas touchée et a fortiori les éthers de glycérol **(GME, GMEE, GMDE et GMTE)** ne sont pas dégradés.

Dans les exemples suivants, DP représente le degré de polymérisation.

### Exemple 2a) : Oligomérisation de l'EEGE

### Test 1 (DP=14):

Dans un bicol de 500ml, on introduit 6,7 g (50mmol) de KH (30% massique dans l'huile) et 250ml de THF anhydre. A 0°C, l'éthanol amine (3,1g, 50 mmoles) fraîchement distillée est ajoutée goutte à goutte. Le mélange est laissé sous agitation à température ambiante pour la nuit. A -50°C, on additionne ensuite **l'EEGE** (50g, 342 mmoles) et on chauffe, après retour à TA, au reflux (66 °C) pendant 24h. Après refroidissement, on hydrolyse le milieu (saumure) et on extrait par un solvant organique immiscible à l'eau, de préférence Et₂O.

Le **polyEEGE** est obtenu sous la forme de 48g d'une huile jaune limpide, dont le DP est évalué par RMN ¹H à 14.

### Test 2 (DP=27):

Le protocole suivant est représentatif des protocoles utilisés pour la préparation des **poly(EEGE).** L'amorçage est décrit à partir d'éthanolamine. La réaction de polymérisation est réalisée sous atmosphère inerte dans un réacteur tricol de 500 ml équipé d'un réfrigérant et d'ampoules de coulée, en trois principaux temps :
- addition lente d'éthanolamine (1,83g, 30 mmol, 1 éq.) à une suspension de d'hydrure de potassium (4 g à 30% dans l'huile, 30 mmol, 1 éq.) dans le THF maintenue à 0°C ;
- retour à température ambiante au terme de l'addition, et réaction 12 h à température ambiante ;
- refroidissement à -50°C, ajout du monomère EEGE (66 g, 0,45 mol, 15 éq.), retour à température ambiante puis chauffage à reflux du THF pendant 48 h.

La réaction de polymérisation est arrêtée par ajout de 10 ml de méthanol au milieu réactionnel préalablement refroidi à température ambiante. Les solvants (THF et méthanol) sont évaporés sous vide, le polymère obtenu est repris dans 100 ml d'éther diéthylique, la phase éthérée est lavée par 25 ml d'eau, séparée, séchée sur MgSO₄, filtrée, concentrée sous vide. Le polymère est ensuite séché sous vide poussé (67g, rendement quantitatif). Le **poly(EEGE)** obtenu a un degré de polymérisation de 27, déterminé par RMN ¹H.

### Test 3 : Influence de la nature de la base utilisée pour déprotonner l'éthanolamine :

L'amorçage est décrit à partir d'éthanolamine. La réaction de polymérisation est réalisée, en trois principaux temps :
- addition lente d'éthanolamine (1 éq.) à une suspension soit d'hydrure de potassium (1 éq.) soit de CsOH (1 éq.) dans le THF maintenue à 0°C;
- retour à température ambiante au terme de l'addition, et réaction 12 h à température ambiante ;
- refroidissement à -50°C, ajout du monomère EEGE (5 éq.), retour à température ambiante puis chauffage à reflux du THF pendant 12 h.

La réaction de polymérisation est arrêtée par ajout de méthanol au milieu réactionnel préalablement refroidi à température ambiante. Les solvants (THF et méthanol) sont évaporés sous vide, le polymère obtenu est repris dans de l'éther diéthylique, la phase éthérée est lavée par de l'eau, séparée, séchée sur MgSO₄, filtrée, concentrée sous vide. Le polymère est ensuite séché sous vide poussé.

Le **poly(EEGE)** obtenu a un degré de polymérisation de 12 lorsque CsOH a été utilisée comme base, et de 7 lorsque KH a été utilisé comme base, déterminé par RMN ¹H (tableau).

| Base | DP (estimé par RMN¹H) | Rendement massique |
|---|---|---|
| CsOH.H₂O | 12 | 86% |
| KH | 7 | 89% |

Le degré de polymérisation est donc influencé par la nature de la base utilisée pour déprotonner l'éthanolamine, ce qui peut s'expliquer par la différence de masse des cations des bases Cs⁺ et K⁺, d'une part, et par l'interaction plus ou moins forte entre l'alcoolate et son contre-ion, qui influe sur la nucléophilie de l'alcoolate amorceur d'autre part.

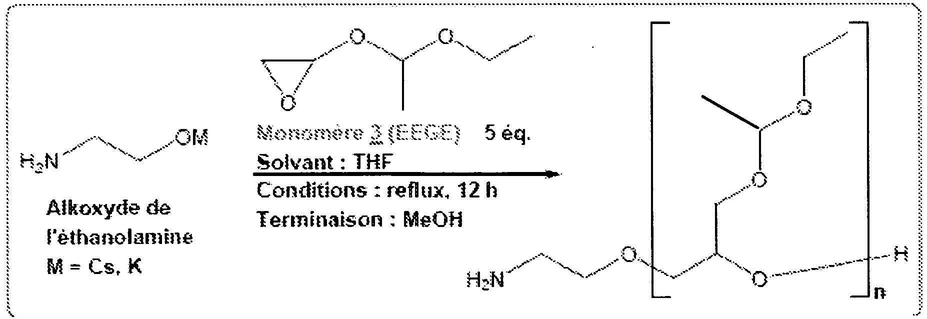

### Exemple 2b) : Oligomérisation du GME (DP=10)

Dans un tricol de 500 ml équipé d'un réfrigérant, d'une ampoule de coulée isobare, d'une arrivée d'azote et d'un bulleur de sortie, on pèse 3,47 g (26 mmol ; 1 éq.) d'hydrure de potassium (30% en masse dans l'huile). L'huile est éliminée par lavages au THF anhydre (3x15 ml). Après ajout de 200 ml de THF anhydre, la suspension obtenue est refroidie à 0°C.

L'éthanolamine (1,65 g ; 27 mmol ; 1 éq.) est ajoutée au goutte-à-goutte à cette suspension maintenue à 0°C sous vive agitation magnétique. La température du milieu réactionnel est ensuite fixée à 20 °C et maintenue à cette valeur pendant 2 heures, au terme desquelles l'alkoxyde souhaité est formé (KH entièrement consommé, fin du bullage d'hydrogène).
La température du milieu réactionnel est alors abaissée à -50°C, et le GME (22,7 g ; 257 mmol ; 10 éq.) ajouté au goutte-à-goutte. À la fin de l'ajout, le milieu réactionnel est chauffé à 66°C et maintenu au reflux du THF pendant 48 heures.

Après retour à température ambiante, le mélange réactionnel est neutralisé par addition d'acide sulfurique concentré (98%) (1,5 ml) méthanolique (50 ml), puis concentré par évaporation sous pression réduite. L'huile obtenue est reprise à l'éther (200 ml), la phase éthérée extraite à l'eau (3x200 ml), et l'eau éliminée par lyophilisation.

L'oligomère est ainsi isolé pur avec un rendement quantitatif (huile orange visqueuse, 24 g, DPₙ = 10, Mₙ = 1000 g/mol).

### Exemple 2c) : Oligomérisation du GMEE (DP=10)

Dans un tricol de 500ml muni d'un réfrigérant et d'une ampoule de coulée, on introduit 3,5 g (26mmol) de KH (30% massique dans l'huile) et 200ml de THF anhydre. A 0°C, l'éthanol amine (1,65g, 27 mmoles) fraîchement distillée est ajoutée goutte à goutte. Le mélange est laissé sous agitation à température ambiante 2h. A -50°C, on additionne ensuite le **GMEE** (22,7g, 257 mmoles) et on chauffe, après retour à TA, au reflux (66 °C) pendant 44h. Après refroidissement, on neutralise le milieu (H₂SO₄ méthanolique). La phase organique est concentrée, reprise à l'éther et lavée à l'eau. Après évaporation des solvants, le poly**GMEE** apparait sous la forme de 26g d'une huile orangée et le DP est évalué à 10 par RMN ¹H.

### Exemple 2d) : Co-oligomérisation du EEGE/GME (1/1, DP=27)

La copolymérisation dans les proportions souhaitées des deux monomères glycidyl méthyl éther et 1-éthoxy-1-éthylglycidyl éther permet d'accéder à des co-oligomères blocs (en deux étapes consécutives) ou statistiques (mélange des deux monomères au départ de la réaction). La réaction est effectuée dans les mêmes conditions que dans le cas d'un monomère unique. Les rendements et les puretés atteintes sont comparables à celles observées avec un monomère unique.

Suivant le même mode opératoire que décrit pour poly**GME,** on introduit dans un tricol, 3,5 g (26mmol) de KH (30% massique dans l'huile) et 300ml de THF anhydre. A 0°C, l'éthanol amine (1,58g, 26 mmoles) fraîchement distillée est ajoutée goutte à goutte. Le mélange est laissé sous agitation à température ambiante 2h. A -50°C, on additionne ensuite le **GME** (22g, 250 mmol) **et** l**'EEGE** (36,5g, 250mmol) préalablement mélangés dans l'ampoule à décanter. On chauffe, après retour à TA, au reflux (66 °C) pendant 44h. Après refroidissement, on neutralise le milieu (H₂SO₄ méthanolique). La phase organique est concentrée, reprise à l'éther et lacée à l'eau. Après évaporation des solvants, le poly**EEGE/GME** apparait sous la forme de 62g d'une huile orangée et le DP est évalué à 27 par RMN ¹³C (le ratio **EEGE/GME** est conservé).

### EXEMPLE 3 : Réaction de transformation de la fonction amine primaire

Le protocole suivant est représentatif pour la préparation de la pince diphosphonique selon MOEDRITZER -IRANI.

### Exemple 3a) : transformation de la fonction amine primaire de poly(GME)

Dans un tricol de 250 mL équipé d'une agitation mécanique, d'une ampoule de coulée isobare surmontée d'une arrivée d'azote, d'un réfrigérant surmonté d'un bulleur de sortie, sont pesés 22,3 g (23,5 mmol ; 1 éq.) de l'oligomère poly**(GME).**

L'acide phosphoreux (Janssen^{®} 97%) (5 g ; 60 mmol ; 2,5 éq.) est ajouté sous vive agitation, par portions, en veillant à contrôler la température du milieu réactionnel (20-25°C) par la vitesse de l'ajout (ajout exothermique). Au terme de l'ajout, le milieu réactionnel est maintenu sous vive agitation à température ambiante pendant 24 heures.

Après addition au goutte-à-goutte de 2,5 mL (30 mmol ; 1,2 éq.) d'acide chlorhydrique concentré (37%), le mélange réactionnel est chauffé à 100°C (reflux). Dès cette température atteinte, sont ajoutés très lentement, (0,8 ml/h) à l'aide d'un pousse - seringue, 6 mL (60 mmol ; 2,5 éq.) de formaldéhyde aqueux (37%). Le milieu réactionnel est ensuite maintenu à 100°C sous vive agitation pendant 48 heures.

Après refroidissement, ajout d'eau (250 ml) et extraction, la phase aqueuse est lavée à l'éther (100 ml), puis l'eau éliminée par lyophilisation.

L'oligomère porteur de la pince bis(phosphonique) (Mₙ = 1100 g/mol, DPₙ = 10) est isolé sous forme d'une huile orange visqueuse avec un bon rendement et une bonne pureté (31 g ; traces d'acide phosphoreux résiduel).

### Exemple 3b) : transformation de la fonction amine primaire de poly(EEGE)

La transformation, en milieu acide, de la fonction amine primaire en groupement acide N -diméthylène diphosphonique de structure : -N[CH₂P(O)(OR')₂]₂ selon les réactions de MOEDRITZER - IRANI (avec R' = H) ou de KABASHNICK-FIELDS (avec R' = OC₂H₅) s'accompagne d'une réaction d'hydrolyse des groupements acétals latéraux du **polyEEGE** correspondant à la déprotection des groupes hydroxyles. Un composé de formule suivante est donc obtenu :

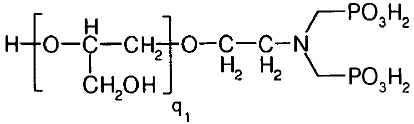

### Exemple 3c) : transformation de la fonction amine primaire de poly(EEGE/GME)

La réaction de MOEDRITZER - IRANI réalisée dans les mêmes conditions que dans l'exemple 3a) mais avec le copolymère poly(glycidyl méthyl éther-co- 1-éthoxy-1-éthylglycidyl éther) obtenu dans l'exemple 2d), permet de greffer la pince diphosphonique, pour accéder à des co-oligomères poly(glycérol -co- glycidyl méthyl éther à extrémité di -phosphonique (structure 2).

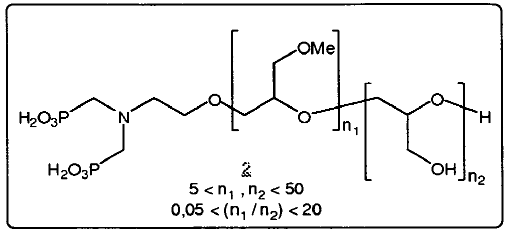

### EXEMPLE 4 : Utilisation des composés comme fluidifiants pour des suspensions de particules minérales

### Préparation des pâtes cimentaires

La suspension de particules minérales est du ciment dans l'eau.

Le ciment utilisé est le CEM I 52,5N CE CP2 NF^{®} de l'usine du Havre avec un rapport eau/ciment de 0,35. Les composés selon l'invention sont dilués dans l'eau jusqu' à une concentration de 20% massique, leur pH est établi à une valeur entre 5 et 6 à l'aide de soude. Un additif anti-entraînement d'air est également ajouté afin d'éliminer toute influence de bulles piégées sur la rhéologie de pâte.

### Mesures rhéologiques

L'ouvrabilité a été évaluée par mesure de diamètre d'étalement (slump flow - diamètre de la flaque formée après écoulement) comme suit. On remplit un moule sans fond de forme tronconique, de reproduction à l'échelle 0,5 du cône d'Abrams (voir norme NF 18-451, 1981) de dimensions suivantes :

| | |
|---|---|
| diamètre du cercle de la base supérieure | 5 cm |
| diamètre du cercle de la base inférieure | 10 cm |
| hauteur | 15 cm |

d'un mortier en trois couches de volume identique, puis on pique entre chaque couche le mortier 15 fois à l'aide d'une tige de piquage en acier de 6 mm de diamètre et à extrémité sphérique). On arase la surface supérieure du cône puis on soulève le cône verticalement. L'étalement est mesuré à 5, 30, 60 et 90 minutes selon 2 diamètres à 90° avec un mètre à ruban. Le résultat de la mesure d'étalement est la moyenne des 2 valeurs à +/- 1 mm. Les essais sont réalisés à 20°C.

La pâte de ciment, le mortier ou le béton se comportent comme des fluides à contrainte seuil : au repos, les particules les plus fines subissent des forces d'attraction qui les organisent en réseaux rigides que l'on doit rompre avant tout écoulement. Il est généralement reconnu que la fluidité mesurée par un essai d'étalement par exemple est inversement liée à la valeur de contrainte seuil (à savoir la contrainte de cisaillement minimale à appliquer pour provoquer l'écoulement), mesurée ici à l'aide d'un rhéomètre rotationnel muni d'un mobile à ailettes (rhéomètre CONTRAVES RHEOMAT^{®} 115 à géométrie à ailettes). La méthode retenue est une rampe croissante de gradient de cisaillement de 0 à 640 s⁻¹.

L'effet sur la contrainte seuil des adjuvants reportés ci-dessous a été examiné :
- ciment sans adjuvant (référence : CEM 1 LH^{®} lot septembre 2006) produit témoin ;
- avec n°66 (EPB-542-006) : co-oligo (glycidol / glycidyl méthyl éther : 50 / 50) ;
- avec n°70 (EPB-542-008) : oligo (glycidyl méthoxyéthyl éther) ou oligo(GMEE) ;
- avec n°68 (EPB-542-005) : oligo (glycidyl méthyl éther) ou oligo(GME) ;
- avec Optima 100, produit commercialisé par la Société CHRYSO^{®} (EPB-542-004) : différents dosages, différents temps, qui permet d'étalonner les composés selon l'invention par rapport à un produit industriel existant ayant des propriétés bien connues.

### Comparaison des contraintes seuil initiales

Les contraintes mesurées à 5 minutes sont représentées sur la figure 1, pour les cinq formulations précédentes.

Le ciment seul (CEM 1 LH septembre 2006) a une contrainte seuil initiale (5 mn) de 1000 Pa. La dose référence d'adjuvant a été fixée à 1,4%, exprimé en masse d'additif sec par rapport à la masse de liant contenu dans la pâte cimentaire. Le taux de l'auxilliaire de formulation (antimousse) étant très faible, la dose de composé est de 1,39% d'additif sec par rapport au ciment. Cette dose permet d'abaisser la contrainte seuil initiale à 100 Pa avec l'Optima 100 (EPB-542-004).

À ce dosage de 1,4%, ces tests montrent que :
- l'oligo(GME) [n° 68 ; EPB-542-005] est dans la même gamme de valeurs que l'Optima 100 [EPB-542-004],
- l'oligo(GMEE) [n° 70 ; EPB-542-005] permet d'abaisser la contrainte seuil initiale jusqu'à 300 Pa,
- le co-oligo(glycidol / glycidyl méthyl éther : 50 / 50) [n° 66 ; EPB-542-006] ne permet qu'une diminution modeste de la contrainte seuil initiale (650 Pa).

### Test à 1,4% et à 2h de l'oligo(glycidyl méthyl éther) [n° 68 ; EPB-542-005]

Le bon résultat obtenu en terme d'abaissement de la contrainte seuil à 5 mn avec n° 68 à la dose de 1,4% nous a incité à évaluer cet adjuvant sur la durée.

La figure 2 représente les résultats jusqu'à tₒ + 2h, où tₒ correspond au moment où le ciment est mis en contact avec l'eau.

À la dose de 1,4% pour cet adjuvant, la contrainte seuil est de 100 Pa dès 5 minutes. De plus, l'abaissement maximum de la contrainte seuil n'est pas atteint après 5 minutes, ni même après 30 minutes. Ce n'est qu'après 1 heure que la contrainte seuil minimale est observée (environ 40 Pa). Cette valeur faible de contrainte seuil restera ensuite inchangée durant 1 heure supplémentaire.

### Test à 0.7% à 2h de l'oligo(GME) [no 68 ; EPB-542-005] et comparaison à l'Optima 100 [EPB-542-004]

Au vu des bons résultats obtenus à la dose de 1,4% avec l'oligo(glycidyl méthyl éther) [n° 68 ; EPB-542-005], un test comparatif au regard de l'Optima 100 a été effectué à la dose plus basse de 0,7%.

Les deux figures 3 et 4 résument les résultats observés à cette dose de 0,7% pour une durée d'expérience de 2 heures :
- l'abaissement initial (5 minutes) de la contrainte seuil est meilleur avec l'oligo(GME) (150-200 Pa) qu'avec l'Optima 100 (250-300 Pa),
- à cette dose de 0,7%, l'oligo(GME) perd de son efficacité avec le temps : sur une période de 2 heures, la contrainte seuil mesurée passe progressivement de 150-200 Pa à 450-500 Pa,
- en revanche, l'Optima 100 ne commence à perdre en efficacité qu'après la première heure ; de plus, sur une plage de 2 h la contrainte seuil ne dépasse jamais les 300 Pa.

En résumé, à la dose de 0,7%, les résultats obtenus en terme de contrainte seuil avec l'Optima 100 [EPB-542-004] et l'oligo(GME) [n° 68 ; EPB-542-005] sont comparables la première demi-heure. Ensuite, l'Optima 100 permet un meilleur maintien, tandis que l'oligo(GME) perd progressivement en efficacité. Rappelons ici que cette perte d'efficacité sur la durée de l'oligo(GME) n'avait pas été observée à la dose plus forte de 1,4%.

### Test à 1,4% sur 1 heure de l'oligo(GMEE) [n°70 ; EPB-542-008]

Il a été signalé précédemment que l'oligo(GMEE) testé à la dose de 1,4% abaisse la contrainte seuil initiale (5 minutes) à 300 Pa.

Un test effectué sur 1 heure montre que cette valeur est conservée pendant cette durée, comme indiqué sur la figure 5 résumant l'expérience.

Conclusion : L'oligo(GMEE) offre donc à la dose de 1,4% une réduction sensible de la contrainte seuil, et le maintien de rhéologie sur 1 heure est bon.

## Revendications

1. Composé de formule (I) suivante : 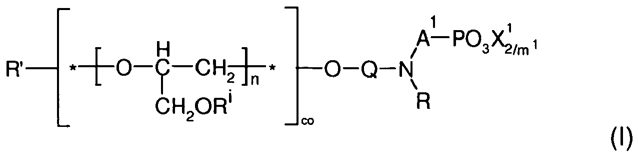 dans laquelle :
- n représente un nombre entier compris entre 1 et 100 ;
- i est un nombre entier variant de 1 à n tel que, pour chaque valeur de i, chacun des Rⁱ représente un atome d'hydrogène, un alkyle, un aryle, un 1-(1-alkylalcoxy), un radical -[CH₂-CH₂-O]_{q}-Alk, où q représente un nombre entier de 1 à 20 et Alk représente un alkyle,
- R^{'} représente un hydrogène ou un alkyle,
- Q représente un groupe alkylène linéaire ou ramifié comprenant de 2 à 10 atomes de carbone,
- A¹ représente un groupe alkylène ou alkylidène comprenant de 1 à 6 atomes de carbone, ou un groupe arylène,
- X¹ représente un hydrogène, un alkyle de 1 à 5 atomes de carbone ou un cation mono- ou divalent, notamment un cation alcalin, alcalino-terreux ou ammonium, tels que m¹ représente 1 lorsque X¹ représente un hydrogène, un alkyle de 1 à 5 atomes de carbone ou un cation monovalent, et m¹ représente 2 lorsque X¹ représente un cation divalent,
- R représente un hydrogène, un alkyle de 1 à 6 atomes de carbone, un aryle ou un groupement -A²-PO₃X²_{2/m2}, où :
- A² représente un groupe alkylène ou alkylidène comprenant de 1 à 6 atomes de carbone, ou un groupe arylène,
- X² représente un hydrogène, un alkyle de 1 à 5 atomes de carbone ou un cation mono- ou divalent, notamment un cation alcalin, alcalino-terreux ou ammonium, tels que m² représente 1 lorsque X² représente un hydrogène, un alkyle de 1 à 5 atomes de carbone ou un cation monovalent, et m² représente 2 lorsque X² représente un cation divalent,
- « co » signifie que l'arrangement des unités consécutives du polymère n'est pas spécifié,
- « * » signifie que les différentes unités peuvent être assemblées les unes aux autres en tout ordre.

2. Composé selon la revendication 1, de formule (II) suivante : 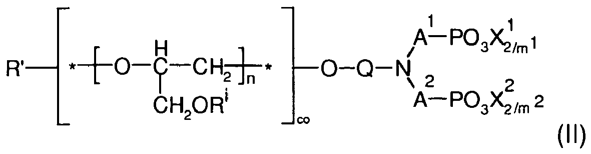 dans laquelle :
- n, i, Rⁱ, R^{'}, Q, X¹, X², m¹ et m² sont tels que définis dans la revendication 1, et
A¹ et A² représentent indépendamment un groupe alkylène ou alkylidène comprenant de 1 à 6 atomes de carbone, ou un groupe arylène.

3. Composé selon la revendication 1 ou 2, dans laquelle chacun des Rⁱ représente indépendamment un hydrogène, un méthyle, un éthyle, un aryle,-CH(CH₃)-OCH₂CH₃, -[CH₂-CH₂-O]_{q}-CH₃, où q représente un nombre entier 1 à 20, de préférence de 1 à 5.

4. Composé selon l'une quelconque des revendications 1 et 3, de formule (III) suivante : 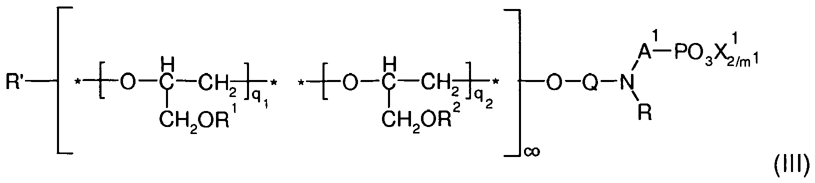 dans laquelle :
- R^{'}, A¹, R, Q, X¹ et m¹ sont tels que définis dans la revendication 1,
- R¹ et R² répondent à la définition des Rⁱ de la revendication 1,
- q₁ et q₂ représentent indépendamment un nombre entier de 0 à 100, étant entendu que la somme de q₁ et q₂ vaut n, n étant tel que défini à la revendication 1.

5. Composé selon l'une quelconque des revendications précédentes, de formule (IV) suivante : 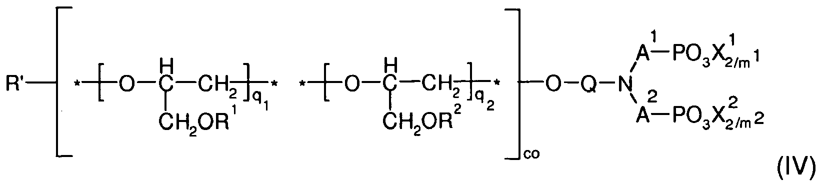 dans laquelle :
- R^{'}, A¹, A², Q, X¹, X², m¹ et m² sont tels que définis dans la revendication 1,
- R¹ et R² répondent à la définition des Rⁱ de la revendication 1,
- q₁ et q₂ représentent indépendamment un nombre entier de 0 à 100, étant entendu que la somme q₁ et q₂ vaut n, n étant tel que défini à la revendication 1.

6. Composé selon l'une quelconque des revendications précédentes, de formule (VI) suivante : 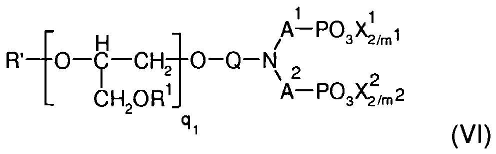 dans laquelle n₁, R¹, R³, Q, A¹, A², X¹, X², m¹ et m² sont tels que définis dans la revendication 1.

7. Composé selon l'une des revendications 1 à 5, de formule (VIII) suivante 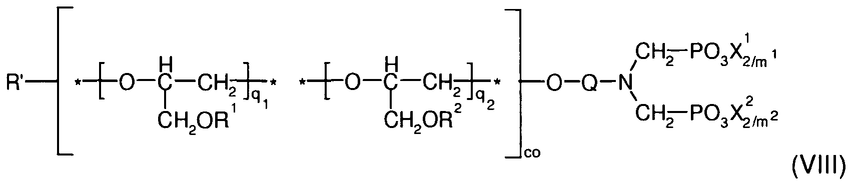 dans laquelle :
- R^{'}, Q, X¹, X², m¹ et m² sont tels que définis dans la revendication 1,
- R¹ et R² répondent à la définition des Rⁱ de la revendication 1,
- q₁ et q₂ représentent indépendamment un nombre entier de 0 à 100, étant entendu que la somme q₁ et q₂ vaut n, n étant tel que défini à la revendication 1.

8. Composé selon l'une des revendications 1 à 5 et 7, de formule (X) suivante : 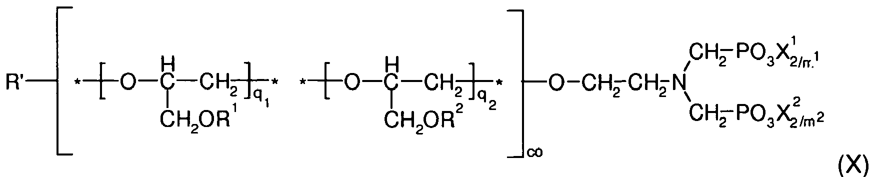 dans laquelle :
- R^{'}, X¹, X², m¹ et m² sont tels que définis dans la revendication 1,
- R¹ et R² répondent à la définition des Rⁱ de la revendication 1,
- q₁ et q₂ représentent indépendamment un nombre entier de 0 à 100, étant entendu que la somme de q₁ et q₂ vaut n, n étant tel que défini à la revendication 1.

9. Composé selon l'une quelconque des revendications 1 à 3 ayant l'une des formules (XI), (XII), (XIII) et (XIV) suivantes : 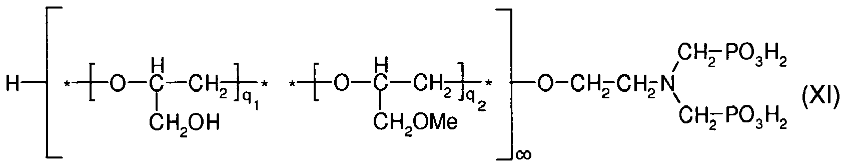 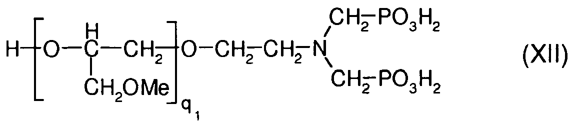 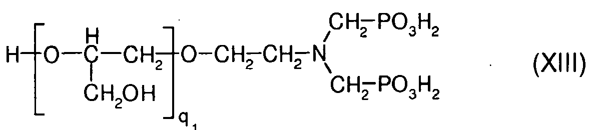 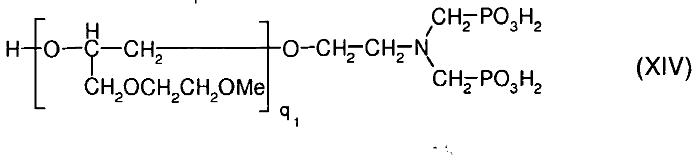 dans lesquelles q₁ et q₂ représentent indépendamment un nombre entier de 0 à 100, étant entendu que la somme q₁ et q₂ vaut n, n étant tel que défini à la revendication 1.

10. Procédé de préparation d'un composé de formule (I) suivante : 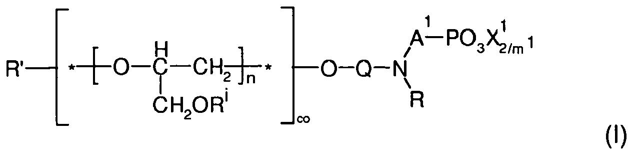 dans laquelle :
- n représente un nombre entier compris entre 1 et 100 ;
- i est un nombre entier variant de 1 à n tel que, pour chaque valeur de i, chacun des Rⁱ représente un atome d'hydrogène, un alkyle, un aryle, un 1-(1-alkylalcoxy), un radical -[CH₂-CH₂-O]_{q}-Alk, où q représente un nombre entier de 1 à 20 et Alk représente un alkyle;
- R^{'} représente un hydrogène ou un alkyle,
- Q représente un groupe alkylène linéaire ou ramifié comprenant de 2 à 10 atomes de carbone,
- A¹ représente indépendamment un groupe alkylène ou alkylidène comprenant de 1 à 6 atomes de carbone, ou un groupe arylène,
- X¹ représente un hydrogène, un alkyle de 1 à 5 atomes de carbone ou un cation mono- ou divalent, notamment un cation alcalin, alcalino-terreux ou ammonium, tels que m¹ représente 1 lorsque X¹ représente un hydrogène, un alkyle de 1 à 5 atomes de carbone ou un cation monovalent, et m¹ représente 2 lorsque X¹ représente un cation divalent,
- R représente un hydrogène, un alkyle de 1 à 6 atomes de carbone, un aryle ou un groupement -A²-PO₃X²_{2/m2}, où :
- A² représente un groupe alkylène ou alkylidène comprenant de 1 à 6 atomes de carbone, ou un groupe arylène,
- X² représente un hydrogène, un alkyle de 1 à 5 atomes de carbone ou un cation mono- ou divalent, notamment un cation alcalin, alcalino-terreux ou ammonium, tels que m² représente 1 lorsque X² représente un hydrogène, un alkyle de 1 à 5 atomes de carbone ou un cation monovalent, et m² représente 2 lorsque X² représente un cation divalent
- « co » signifie que l'arrangement des unités consécutives du polymère n'est pas spécifié,
- « * » signifie que les différentes unités peuvent être assemblées les unes aux autres en tout ordre,
comprenant les étapes de :
- (co)polymérisation en milieu basique d'au moins un éther du glycidol en présence d'un amorceur anionique porteur d'une fonction amine primaire, de préférence un aminoalcoolate, pour obtenir un polyglycérol à terminaison amine primaire,
- transformation de la fonction amine primaire du polyglycérol obtenu lors de l'étape précédente en un groupe amino-alkylène phosphonique.

11. Procédé de préparation du composé de formule (I) selon la revendication 10, comportant en outre une étape préalable de préparation dudit éther de glycidol à partir d'un composé de formule (XX) suivante : 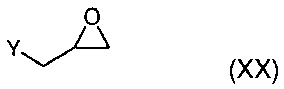 dans laquelle Y représente -OH, un alkylsulfonate ou un halogène, de préférence un chlore.

12. Procédé de préparation du composé de formule (I) selon l'une quelconque des revendications 10 à 11, dans lequel X est un hydrogène ou un cation et la transformation de la fonction amine primaire du polyglycérol à terminaison amine primaire en un groupe amino-alkylène phosphonique est réalisé par réaction de Moedritzer-Irani, éventuellement suivie d'une étape de basification.

13. Procédé de préparation du composé de formule (I) selon l'une quelconque des revendications 10 à 12, dans lequel X est un alkyle de 1 à 5 atomes de carbone et la transformation de la fonction amine primaire du polyglycérol à terminaison amine primaire en un groupe amino-alkylène phosphonique est réalisé par réaction de Kabashnick-Fields, éventuellement suivie d'une étape de neutralisation.

14. Adjuvant comprenant 1 à 50% en poids d'au moins un composé selon l'une quelconque des revendications 1 à 9 et un solvant aqueux, alcoolique ou hydroalcoolique.

15. Utilisation du composé selon l'une quelconque des revendications 1 à 9 comme fluidifiant pour des liants hydrauliques et des suspensions de particules minérales.

## Patentansprüche

1. Verbindung mit folgender Formel (I): 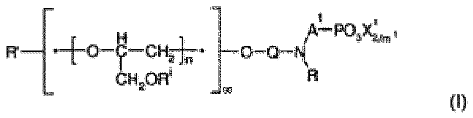 wobei:
- n eine ganze Zahl zwischen 1 und 100 inklusive darstellt,
- i eine ganze Zahl ist, die von 1 bis n derart schwankt, dass für jeden Wert von i jedes der Rⁱ ein Wasserstoffatom, ein Alkyl, ein Aryl, ein 1-(1-Alkylalcoxy), ein Radikal -CH₂-CH₂-O]_{q}-Alk darstellt, wobei q eine ganze Zahl von 1 bis 20 darstellt und Alk ein Alkyl darstellt,
- R' einen Wasserstoff oder ein Alkyl darstellt,
- Q eine lineare oder verzweigte Alkylengruppe darstellt, die 2 bis 10 Kohlenstoffatome umfasst,
- A¹ eine Alkylen- oder Alkylidengruppe darstellt, die 1 bis 6 Kohlenstoffatome umfasst, oder eine Arylengruppe,
- X¹ einen Wasserstoff, ein Alkyl mit 1 bis 5 Kohlenstoffatomen oder ein ein- oder zweiwertiges Kation, insbesondere ein alkalisches, erdalkalisches oder Ammoniumkation darstellt, wobei m¹ 1 darstellt, wenn X¹ einen Wasserstoff, ein Alkyl mit 1 bis 5 Kohlenstoffatomen oder ein einwertiges Kation darstellt, und m¹ 2 darstellt, wenn X¹ ein zweiwertiges Kation darstellt,
- R einen Wasserstoff, ein Alkyl mit 1 bis 6 Kohlenstoffatomen, ein Aryl oder eine Gruppe -A²-PO₃X²_{2/m2} darstellt, wobei:
- A² eine Alkylen- oder Alkylidengruppe darstellt, die 1 bis 6 Kohlenstoffatome umfasst, oder eine Arylengruppe,
- X² einen Wasserstoff, ein Alkyl mit 1 bis 5 Kohlenstoffatomen oder ein einoder zweiwertiges Kation, insbesondere ein alkalisches, erdalkalisches oder Ammoniumkation darstellt, wobei m² 1 darstellt, wenn X² einen Wasserstoff, ein Alkyl mit 1 bis 5 Kohlenstoffatomen oder ein einwertiges Kation darstellt, und m² 2 darstellt, wenn X² ein zweiwertiges Kation darstellt,
- "co" bedeutet, dass die Anordnung der aufeinanderfolgenden Einheiten des Polymers nicht spezifiziert ist,
- "*" bedeutet, dass die verschiedenen Einheiten in jeder Reihenfolge miteinander verbunden sein können.

2. Verbindung nach Anspruch 1 mit der folgenden Formel (II): 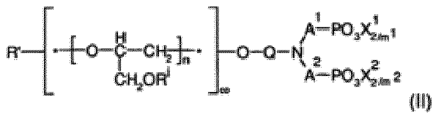 wobei:
- n, i, Rⁱ, R', Q, X¹, X², m¹ und m² so sind wie in Anspruch 1 definiert und
A¹ und A² unabhängig eine Alkylen- oder Alkylidengruppe mit 1 bis 6 Kohlenstoffatomen oder eine Arylengruppe darstellen.

3. Verbindung nach Anspruch 1 oder 2, wobei jedes der Rⁱ unabhängig einen Wasserstoff, ein Methyl, ein Ethyl, ein Aryl, -CH(CH₃)-OCH₂CH₃, -[CH₂-CH₂-O]_{q}-CH₃ darstellt, wobei q eine ganze Zahl von 1 bis 20, vorzugsweise von 1 bis 5, darstellt.

4. Verbindung nach einem der Ansprüche 1 und 3 mit der folgenden Formel (III): 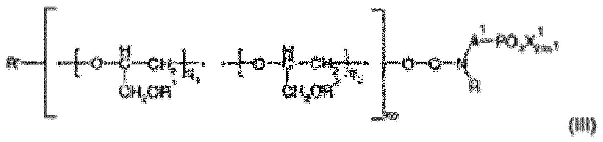 wobei:
- R', A¹, R, Q, X¹ und m¹ so sind wie in Anspruch 1 definiert,
- R¹ und R² der Definition der Rⁱ von Anspruch 1 entsprechen,
- q₁ und q₂ unabhängig eine ganze Zahl von 0 bis 100 darstellen, wobei gilt, dass die Summe von q₁ und q₂ n ist, wobei n so ist wie in Anspruch 1 definiert.

5. Verbindung nach einem der vorangehenden Ansprüche mit der folgenden Formel (IV): 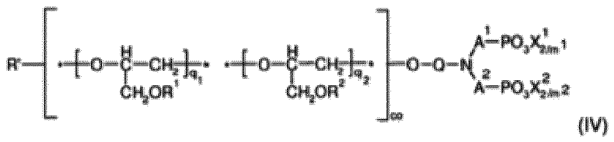 wobei:
- R', A¹, A², Q, X¹, X², m¹ und m² so sind wie in Anspruch 1 definiert,
- R¹ und R² der Definition der Rⁱ von Anspruch 1 entsprechen,
- q₁ und q₂ unabhängig eine ganze Zahl von 0 bis 100 darstellen, wobei gilt, dass die Summe von q₁ und q₂ n ist, wobei n so ist wie in Anspruch 1 definiert.

6. Verbindung nach einem der vorangehenden Ansprüche mit der folgenden Formel (VI): 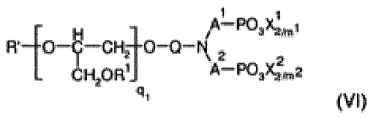 wobei n₁, R¹, R³, Q, A¹, A², X¹, X², m¹ und m² so sind wie in Anspruch 1 definiert.

7. Verbindung nach einem der Ansprüche 1 bis 5 mit der folgenden Formel (VIII): 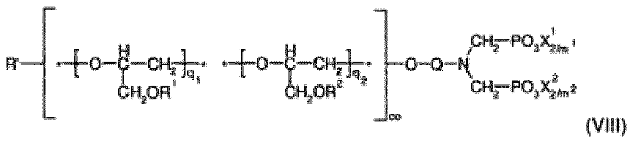 wobei:
- R', Q, X¹, X², m¹ und m² so sind wie in Anspruch 1 definiert,
- R¹ und R² der Definition der Rⁱ von Anspruch 1 entsprechen,
- q₁ und q₂ unabhängig eine ganze Zahl von 0 bis 100 darstellen, wobei gilt, dass die Summe von q₁ und q₂ n ist, wobei n so ist wie in Anspruch 1 definiert.

8. Verbindung nach einem der Ansprüche 1 bis 5 und 7 mit der folgenden Formel (X): 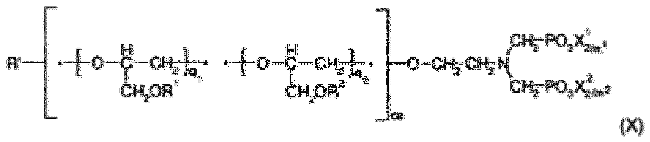 wobei:
- R', X¹, X², m¹ und m² so sind wie in Anspruch 1 definiert,
- R¹ und R² der Definition der Rⁱ von Anspruch 1 entsprechen,
- q₁ und q₂ unabhängig eine ganze Zahl von 0 bis 100 darstellen, wobei gilt, dass die Summe von q₁ und q₂ n ist, wobei n so ist wie in Anspruch 1 definiert.

9. Verbindung nach einem der Ansprüche 1 bis 3 mit einer der folgenden Formeln (XI), (XII), (XIII) und (XIV): 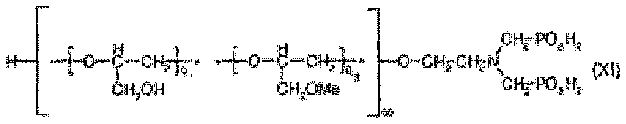 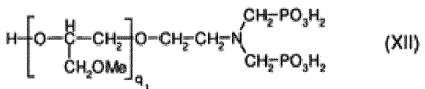 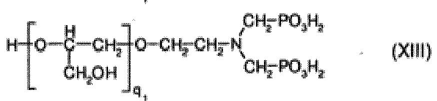 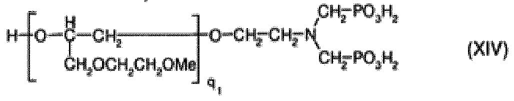
- wobei q₁ und q₂ unabhängig eine ganze Zahl von 0 bis 100 darstellen, wobei gilt, dass die Summe von q₁ und q₂ n ist, wobei n so ist wie in Anspruch 1 definiert.

10. Herstellungsverfahren einer Verbindung mit der folgenden Formel (I): 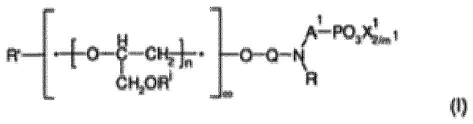 wobei:
- n eine ganze Zahl zwischen 1 und 100 inklusive darstellt,
- i eine ganze Zahl ist, die von 1 bis n derart schwankt, dass für jeden Wert von i jedes der Rⁱ ein Wasserstoffatom, ein Alkyl, ein Aryl, ein 1-(1-Alkylalcoxy), ein Radikal -CH₂-CH₂-O]_{q}-Alk darstellt, wobei q eine ganze Zahl von 1 bis 20 darstellt und Alk ein Alkyl darstellt,
- R' einen Wasserstoff oder ein Alkyl darstellt,
- Q eine lineare oder verzweigte Alkylengruppe darstellt, die 2 bis 10 Kohlenstoffatome umfasst,
- A¹ unabhängig eine Alkylen- oder Alkylidengruppe mit 1 bis 6 Kohlenstoffatomen oder eine Arylengruppe darstellt, ,
- X¹ einen Wasserstoff, ein Alkyl mit 1 bis 5 Kohlenstoffatomen oder ein ein- oder zweiwertiges Kation, insbesondere ein alkalisches, erdalkalisches oder Ammoniumkation darstellt, wobei m¹ 1 darstellt, wenn X¹ einen Wasserstoff, ein Alkyl mit 1 bis 5 Kohlenstoffatomen oder ein einwertiges Kation darstellt, und m¹ 2 darstellt, wenn X¹ ein zweiwertiges Kation darstellt,
- R einen Wasserstoff, ein Alkyl mit 1 bis 6 Kohlenstoffatomen, ein Aryl oder eine Gruppe -A²-PO₃X²_{2/m2} darstellt, wobei:
- A² eine Alkylen- oder Alkylidengruppe, die 1 bis 6 Kohlenstoffatome umfasst, oder eine Arylengruppe darstellt,
- X² einen Wasserstoff, ein Alkyl mit 1 bis 5 Kohlenstoffatomen oder ein ein- oder zweiwertiges Kation, insbesondere ein alkalisches, erdalkalisches oder Ammoniumkation darstellt, wobei m² 1 darstellt, wenn X² einen Wasserstoff, ein Alkyl mit 1 bis 5 Kohlenstoffatomen oder ein einwertiges Kation darstellt, und m² 2 darstellt, wenn X² ein zweiwertiges Kation darstellt,
- "co" bedeutet, dass die Anordnung der aufeinanderfolgenden Einheiten des Polymers nicht spezifiziert ist,
- "*" bedeutet, dass die verschiedenen Einheiten in jeder Reihenfolge miteinander verbunden sein können,
mit den folgenden Schritten:
- (Co)Polymerisieren in basischem Medium mindestens eines Glycidolethers in Anwesenheit eines anionischen Initiators mit einer primären Aminfunktion, vorzugsweise eines Aminoalkoholats, um ein Polyglycerol mit einer terminalen primären Aminfunktion zu erhalten,
- Umwandeln der primären Aminfunktion des Polyglycerols vom vorangehenden Schritt in eine phosphonische Alkylenamingruppe.

11. Herstellungsverfahren der Verbindung mit der Formel (I) nach Anspruch 10, das es ferner einen vorgehenden Vorbereitungsschritt umfasst, in welchem der Glycidolether aus einer Verbindung mit der folgenden Formel (XX): 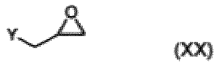 dargestellt wird, wobei Y -OH, ein Alkylsulfonat oder ein Halogen, vorzugsweise ein Chlor, darstellt.

12. Herstellungsverfahren der Verbindung mit der Formel (I) nach einem der Ansprüche 10 bis 11, wobei X ein Wasserstoff oder ein Kation ist und die Umwandlung der primären Aminfunktion des Polyglycerols mit terminalen primären Aminofunktion in eine phosphonische Alkylenamingruppe über eine Moedritzer-Irani-Reaktion, eventuell gefolgt von einem Basifizierungsschritt, durchgeführt wird.

13. Herstellungsverfahren der Verbindung mit der Formel (I) nach einem der Ansprüche 10 bis 12, wobei X ein Alkyl mit 1 bis 5 Kohlenstoffatomen ist und die Umwandlung der primären Aminfunktion des Polyglycerols mit terminaler primärer Aminfunktion in eine phosphonische Alkylenamin-gruppe über eine Kabashnick-Fields-Reaktion, eventuell gefolgt von einem Neutralisierungsschritt, durchgeführt wird.

14. Adjuvans, das mindestens 1 bis 50 Gew.-% einer Verbindung nach einem der Ansprüche 1 bis 9 und ein wässriges, alkoholisches oder hydroalkoholisches Lösungsmittel umfasst.

15. Verwendung der Verbindung nach einem der Ansprüche 1 bis 9 als Verflüssiger für hydraulische Binder und Suspensionen mineralischer Partikel.

## Claims

1. A compound of following formula (I): 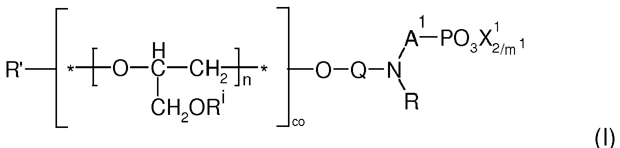 where:
- n is an integer of between 1 and 100;
- i is an integer varying from 1 to n, such that for each value of i, each Rⁱ represents a hydrogen atom, an alkyl, an aryl, a 1-(1-alkylalcoxy), a -[CH₂-CH₂-O]_{q}-Alk radical in which q is an integer of between 1 and 20, and Alk represents an alkyl,
- R is a hydrogen or an alkyl,
- Q is a straight chain or branched alkylene group comprising 2 to 10 carbon atoms,
- A¹ is an alkylene or alkylidene group comprising 1 to 6 carbon atoms, or an arylene group,
- X¹ represents a hydrogen, an alkyl with 1 to 5 carbon atoms or a mono- or divalent cation, in particular an alkaline, alkaline-earth or ammonium cation, such that m¹ is 1 when X¹ represents a hydrogen, an alkyl with 1 to 5 carbon atoms or a monovalent cation, and m¹ is 2 when X¹ represents a divalent cation,
- R represents a hydrogen, an alkyl with 1 to 6 carbon atoms, an aryl or an -A²-PO₃X²_{2/m2} group where:
- A² is an alkylene or alkylidene group comprising 1 to 6 carbon atoms, or an arylene group,
- X² represents a hydrogen, an alkyl with 1 to 5 carbon atoms or a mono- or divalent cation, in particular an alkaline, alkaline-earth or ammonium cation, such that m² is 1 when X² represents a hydrogen, an alkyl with 1 to 5 carbon atoms or a monovalent cation, and m² is 2 when X² represents a divalent cation.

2. The compound according to claim 1, of following formula (II) : 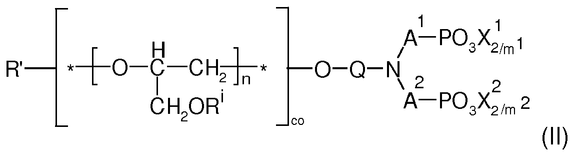 where:
- n, i, Rⁱ, R^{'}, Q, X¹, X², m¹ and m² are such as defined in claim 1, and
A¹ and A² are each independently an alkylene or alkylidene group comprising 1 to 6 carbon atoms, or an arylene group.

3. The compound according to claim 1 or 2, wherein each Rⁱ independently represents a hydrogen, a methyl, an ethyl, an aryl, -CH(CH₃)-OCH₂CH₃, -[CH₂-CH₂-O]_{q}-CH₃ where q is an integer from 1 to 20, preferably from 1 to 5.

4. The compound according to any of claims 1 and 3, of following formula (III) : 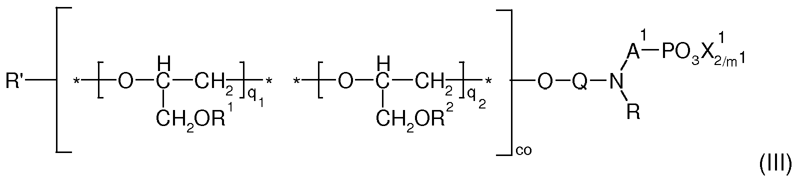 where:
- R^{'}, A¹, R, Q, X¹ and m¹ are such as defined in claim 1,
- R¹ and R² meet the definition given for Rⁱ in claim 1,
- q₁ and q₂ are each independently an integer from 0 to 100, with the proviso that the sum of q₁ and q₂ equals n, n being such as defined in claim 1.

5. The compound according to any of the preceding claims, of following formula (IV): 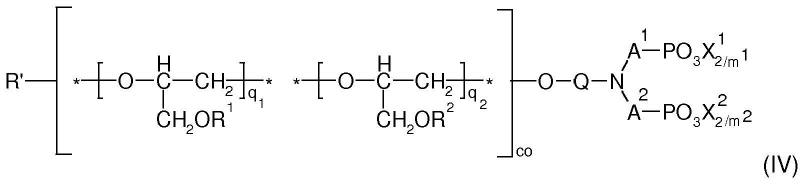 where:
- R^{'}, A¹, A², Q, X¹, X², m¹ and m² are such as defined in claim 1,
- R¹ and R² meet the definition for Rⁱ given in claim 1,
- q₁ and q₂ are each independently an integer of 0 to 100, with the proviso that the sum of q₁ and q₂ equals n, n being such as defined in claim 1.

6. The compound according to any of the preceding claims, of following formula (VI) : 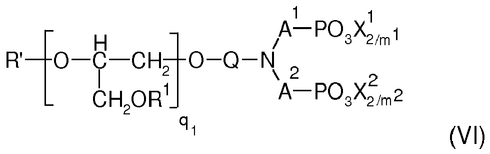 where n₁, R¹, R³, Q, A¹, A², X¹, X², m¹ and m² are such as defined in claim 1.

7. The compound according to one of claims 1 to 5, of following formula (VIII) : 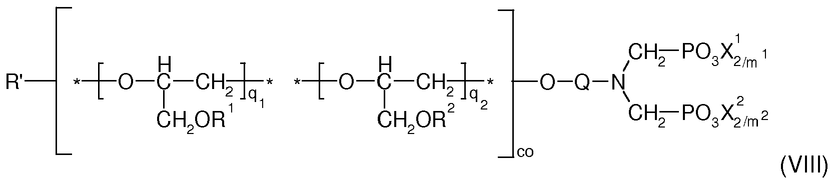 where:
- R, Q, X¹, X², m¹ and m² are such as defined in claim 1,
- R¹ and R² meet the definition for Rⁱ given in claim 1,
- q₁ and q₂ are each independently an integer of 0 to 100, with the proviso that the sum of q₁ and q₂ equals n, n being such as defined in claim 1.

8. The compound according to one of claims 1 to 5 and 7 of following formula (X) : 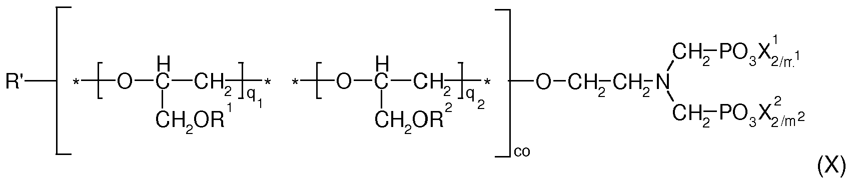 where:
- R^{'}, X¹, X², m¹ and m² are such as defined in claim 1,
- R¹ and R² meet the definition for Rⁱ given in claim 1,
- q₁ and q₂ are each independently an integer of 0 to 100, with the proviso that the sum of q₁ and q₂ equals n, n being such as defined in claim 1.

9. The compound according to any of claims 1 to 3 having one of the following formulas (XI), (XII), (XIII) and (XIV): 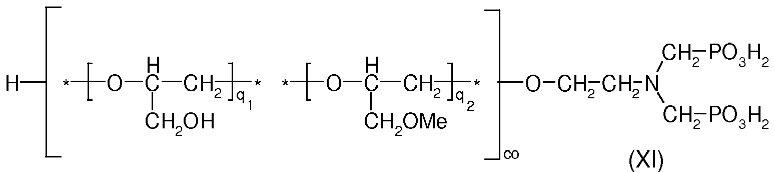 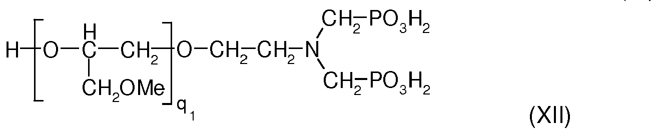 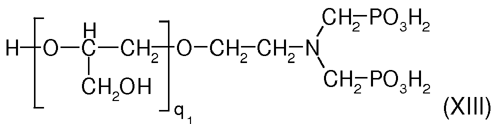 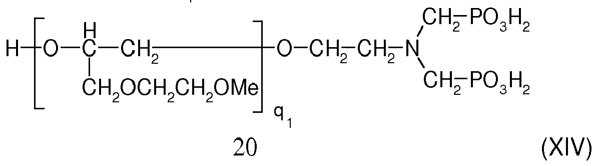 in which q₁ and q₂ are each independently an integer from 0 to 100, with the proviso that the sum of q₁ and q₂ equals n, n being such as defined in claim 1.

10. A method for preparing a compound of following formula (I): 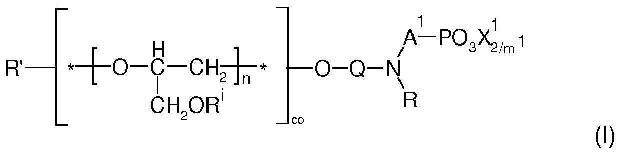 where:
- n is an integer of between 1 and 100;
- i is an integer varying from 1 to n, such that for each value of i, each Rⁱ represents a hydrogen atom, an alkyl, an aryl, a 1-(1-alkylalkoxy), a -[CH₂-CH₂-O]_{q}-Alk radical where q is an integer of 1 to 20 and Alk represents an alkyl;
- R represents a hydrogen or an alkyl;
- Q represents a straight or branched alkylene group comprising 2 to 10 carbon atoms;
- A¹ independently represents an alkylene or alkylidene group comprising 1 to 6 carbon atoms, or an arylene group;
- X¹ is a hydrogen, an alkyl with 1 to 5 carbon atoms or a mono- or divalent cation, in particular an alkaline, alkaline-earth or ammonium cation, such that m¹ is 1 when X¹ represents a hydrogen, an alkyl with 1 to 5 carbon atoms or a monovalent cation, and m¹ is 2 when X¹ represents a divalent cation;
- R represents a hydrogen, an alkyl with 1 to 6 carbon atoms, an aryl or an A²-PO₃X²_{2/m2} group where:
- A² représents an alkylene or alkylidene group with 1 to 6 carbon atoms, or an arylene group,
- X² represents a hydrogen, an alkyl with 1 to 5 carbon atoms or a mono- or divalent cation, in particular an alkaline, alkaline-earth or ammonium cation, such that m² is 1 when X² represents a hydrogen, an alkyl with 1 to 5 carbon atoms or a monovalent cation, and m² is 2 when X² represents a divalent cation,
comprising the steps of:
- (co)polymerizing in a basic medium at least one ether of glycidol in the presence of an anionic initiator carrying a primary amine function, preferably an aminoalcoholate, to obtain a polyglycerol with primary amine termination,
- converting the primary amine function of the polyglycerol obtained at the preceding step to an amino-alkylene phosphonic group.

11. The method for preparing a formula (I) compound according to claim 10 further comprising a prior step to prepare the said glycidol ether from a compound of following formula (XX): 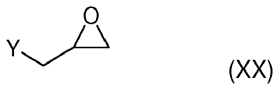 where Y is -OH, an alkylsulfonate or a halogen, preferably chlorine.

12. The method for preparing a formula (I) compound according to any of claims 10 to 11, wherein X is a hydrogen or a cation and the conversion of the primary amine function of the polyglycerol with primary amine termination to an amino-alkylene phosphonic group is conducted by a Moedritzer-Irani reaction, optionally followed by a basification step.

13. The method for preparing a formula (I) compound according to any of claims 10 to 12, wherein X is an alkyl with 1 to 5 carbon atoms and the conversion of the primary amine function of the polyglycerol with primary amine termination to an amino-alkylene phosphonic group is conducted by a Kabashnick-Fields reaction, optionally followed by a neutralization step.

14. An adjuvant comprising 1 to 50 weight % of at least one compound according to any of claims 1 to 9 and an aqueous, alcoholic or hydro-alcoholic solvent.

15. Use of the compound according to any of claims 1 to 9 as a plasticizer for hydraulic binders and suspensions of mineral particles.
